(19) **Europäisches Patentamt / European Patent Office / Office européen des brevets**

(11) **EP 3 992 546 B1**

(12) **EUROPEAN PATENT SPECIFICATION**

(45) Date of publication and mention
of the grant of the patent:
**06.05.2026 Bulletin 2026/19**

(21) Application number: **20832362.6**

(22) Date of filing: **19.06.2020**

(51) International Patent Classification (IPC):
**C09K 5/04** $^{(2006.01)}$   **F25B 1/00** $^{(2006.01)}$

(52) Cooperative Patent Classification (CPC):
**C09K 5/045;** C09K 2205/126; C09K 2205/22;
C09K 2205/40

(86) International application number:
**PCT/JP2020/024050**

(87) International publication number:
**WO 2020/262209 (30.12.2020 Gazette 2020/53)**

(54) **COMPOSITION INCLUDING REFRIGERANT, USE THEREOF, REFRIGERATOR HAVING SAME, AND METHOD FOR OPERATING SAID REFRIGERATOR**

ZUSAMMENSETZUNG, DIE EIN KÜHLMITTEL ENTHÄLT, DEREN VERWENDUNG, KÜHLSCHRANK DAMIT UND VERFAHREN ZUM BETRIEB DIESES KÜHLSCHRANKS

COMPOSITION COMPRENANT UN FLUIDE FRIGORIGÈNE, SON UTILISATION, RÉFRIGÉRATEUR LA COMPRENANT, ET PROCÉDÉ POUR FAIRE FONCTIONNER LEDIT RÉFRIGÉRATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.06.2019 JP 2019118916**

(43) Date of publication of application:
**04.05.2022 Bulletin 2022/18**

(73) Proprietor: **Daikin Industries, Ltd.**
**Osaka-shi, Osaka 530-0001 (JP)**

(72) Inventors:
• **ITANO, Mitsushi**
  **Osaka-shi, Osaka 5300001 (JP)**
• **OHKUBO, Shun**
  **Osaka-shi, Osaka 5300001 (JP)**
• **KARUBE, Daisuke**
  **Osaka-shi, Osaka 5300001 (JP)**
• **TOKUNO, Satoshi**
  **Osaka-shi, Osaka 5300001 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/125874      WO-A1-2015/186557**
**WO-A1-2019/030508      JP-A- 2015 229 767**

**Description**

Technical Field

The present disclosure relates to a composition comprising a refrigerant, use of the composition, a refrigerating machine having the composition, and a method for operating the refrigerating machine.

Background Art

R410A is currently used as an air conditioning refrigerant for home air conditioners etc. R410A is a two-component mixed refrigerant of difluoromethane ($CH_2F_2$: HFC-32 or R32) and pentafluoroethane ($C_2HF_5$: HFC-125 or R125), and is a pseudo-azeotropic composition.
However, the global warming potential (GWP) of R410A is 2088. Due to growing concerns about global warming, R32, which has a GWP of 675, has been increasingly used.
For this reason, various low-GWP mixed refrigerants that can replace R410A have been proposed (WO 2015/141678).
JP-A-2015-229767 discloses an actuation medium for heat cycle containing (E)1,2-difluoroethylene (HFO-1132(E)) and at least one first compound selected from 1,1-difluoroethylene (HFO-1132a), fluoroethylene (HFO-1141), fluoroethane (HFC-161), (Z)-1,2-difluoroethylene (HFO-1132(Z)) and ethylene, wherein the ratio of the total content of the first compound to the total amount of the actuation medium is < 1.5 mass%.

Summary of Invention

Technical Problem

An object of the present disclosure is to provide a novel low-GWP mixed refrigerant.

Solution to Problem

The present invention provides a composition (also referred to as "the present refrigerant composition" herein) comprising a refrigerant comprising trans-1,2-difluoroethylene (HFO-1132(E)), 1,1-difluoroethylene (HFO-1132a), 2,3,3,3-tetrafluoro-1-propene (R1234yf), and difluoromethane (R32), wherein in the refrigerant, when the mass% of HFO-1132(E), HFO-1132a, R1234yf, and R32 based on their sum is respectively represented by x, y, z, and a, coordinates (x,y,z) in a ternary composition diagram in which the sum of HFO-1132(E), HFO-1132a, and R1234yf is (100-a) mass% are within the range of
if $0<a\leq10.0$:
a figure surrounded by straight lines OC, CD, DE, EF, and FO that connect the following 5 points, or on the straight lines CD, DE, and EF (excluding the points O, C, and F):

O  (100-a, 0.0, 0.0),
C  ($0.012a^2-1.96a+68.6$, 0.0, $-0.012a^2+0.96a+31.4$),
D  ($0.012a^2-1.88a+63.2$, 1.5, $-0.012a^2+0.88a+35.3$),
E  ($-0.002a^2-1.41a+58.6$, $0.004a^2-0.14a+2.9$, $-0.002a^2+0.55a+38.5$), and
F  ($-0.014a^2-1.21a+91.9$, $0.014a^2+0.21a+8.1$, 0.0);

if $10.0<a\leq15.3$:
a figure surrounded by straight lines OC, CD, DE, EF, and FO that connect the following 5 points, or on the straight lines CD, DE, and EF (excluding the points O, C, and F):

O  (100-a, 0.0, 0.0),
C  ($0.0104a^2-1.9043a+68.204$, 0.0, $-0.0104a^2+0.9043a+31.796$),
D  ($-1.6038a+61.638$, 1.5, $0.6038a+36.862$),
E  ($-0.0024a^2-1.2979a+57.519$, $0.0038a^2-0.1718a+3.2373$, $-0.0014a^2+0.4697a+39.2437$), and
F  ($0.0046a^2-1.2626a+76.983$, $-0.0046a^2+0.2626a+23.017$, 0.0);

if 15.3<a≤23.0:

a figure surrounded by straight lines OC, CE, EH, HJ, JF, and FO that connect the following 6 points, or on the straight lines CE, EH, HJ, and JF (excluding the points O, C, and F):

O  (100-a, 0.0, 0.0),
C  $(0.0104a^2-1.9043a+68.204, 0.0, -0.0104a^2+0.9043a+31.796)$,
E  $(-0.0024a^2-1.2979a+57.519, 0.0038a^2-0.1718a+3.2373, -0.0014a^2+0.4697a+39.2437)$,
H  $(-0.0205a^2-0.4995a+49.548, 1.5, 0.0205a^2-0.5005a+48.952)$,
J  $(-2.026a+99.597, -0.2338a+19.677, 1.2598a-19.274)$, and
F  $(0.0046a^2-1.2626a+76.983, -0.0046a^2+0.2626a+23.017, 0.0)$;

if 23.0<a≤30.0:

a figure surrounded by straight lines OC, CE, EH, HJ, JF, and FO that connect the following 6 points, or on the straight lines CE, EH, HJ, and JF (excluding the points O, C, and F):

O  (100-a, 0.0, 0.0),
C  $(0.0089a^2-1.8282a+67.247, 0.0, -0.0089a^2+0.8282a+32.753)$,
E  $(-0.0053a^2-1.1031a+54.592, 0.0057a^2-0.2755a+4.6013, -0.0004a^2+0.3786a+40.8067)$,
H  $(-0.0226a^2-0.3009a+46.089, 1.5, 0.0226a^2-0.6991a+52.411)$,
J  $(0.0037a^2-1.8827a+94.336, -0.0117a^2+0.4781a+9.5015, 0.008a^2+0.4046a-3.8375)$, and
F  $(-0.0026a^2-0.5259a+58.197, 0.0026a^2-0.4741a+41.803, 0.0)$;

if 30.0<a≤33.4: a figure surrounded by straight lines OC, CD, DE, EJ, JF, and FO that connect the following 6 points, or on the straight lines CD, DE, EJ, and JF (excluding the points O, C, and F):

O  (100-a, 0.0, 0.0),
C  $(0.0089a^2-1.8282a+67.247, 0.0, -0.0089a^2+0.8282a+32.753)$,
D  $(0.0098a^2-1.8547a+63.548, 1.5, -0.0098a^2+0.8547a+34.952)$,
E  $(-0.0053a^2-1.1031a+54.592, 0.0057a^2-0.2755a+4.6013, -0.0004a^2+0.3786a+40.8067)$,
J  $(0.0037a^2-1.8827a+94.336, -0.0117a^2+0.4781a+9.5015, 0.008a^2+0.4046a-3.8375)$, and
F  $(-0.0026a^2-0.5259a+58.197, 0.0026a^2-0.4741a+41.803, 0.0)$;

if 33.4<a≤41.7:

a figure surrounded by straight lines OC, CD, DE, EJ, JF, and FO that connect the following 6 points, or on the straight lines CD, DE, EJ, and JF (excluding the points O, C, and F):

O  (100-a, 0.0, 0.0),
C  $(0.0092a^2-1.8594a+67.944, 0.0, -0.0092a^2+0.8594a+32.056)$,
D  $(0.0098a^2-1.8547a+63.548, 1.5, -0.0098a^2+0.8547a+34.952)$,
E  $(-0.00908a^2-0.7415a+46.67, 0.00793a^2-0.4513a+8.0212, 0.00115a^2+0.1928a+45.3088)$,
J  $(0.00673a^2-1.8435a+89.655, 0.00347a^2-0.2223a+15.9846, -0.0102a^2+1.0658a-5.6396)$, and
F  $(0.02462a^2-2.9592a+112.85, -0.02462a^2+1.9592a-12.85, 0.0)$;

if 41.7<a≤44.7:

a figure surrounded by straight lines OC, CD, DI, IJ, JF, and FO that connect the following 6 points, or on the straight lines CD, DI, IJ, and JF (excluding the points O, I, C, and F):

O  (100-a, 0.0, 0.0),
C  $(0.00562a^2-1.554a+61.394, 0.0, -0.00562a^2+0.554a+38.606)$,
D  $(0.0098a^2-1.8547a+63.548, 1.5, -0.0098a^2+0.8547a+34.952)$,
I  $(-0.0025a^2+0.6799a-20.96, 0.0, 0.0025a^2-1.6799a+120.96)$,

(continued)

J　　(0.0224a$^2$-3.1675a+117.66, 0.0155a$^2$-1.2736a+38.833, -0.0379a$^2$+3.4411a-56.493), and

F　　(0.0193a$^2$-2.5362a+104.46, -0.0193a$^2$+1.5362a-4.46, 0.0);

if 44.7<a≤47.8:

a figure surrounded by straight lines OC, CE, EI, IJ, JF, and FO that connect the following 6 points, or on the straight lines CE, IJ, and JF (excluding the points O, E, C, and F):

O　　(100-a, 0.0, 0.0),

C　　(0.00562a$^2$-1.554a+61.394, 0.0, -0.00562a$^2$+0.554a+38.606),

E　　(0.0, 0.00263a$^2$-0.7285a+28.779, -0.00263a$^2$-0.2715a+71.221),

I　　(-0.0025a$^2$+0.6799a-20.96, 0.0, 0.0025a$^2$-1.6799a+120.96),

J　　(0.0224a$^2$-3.1675a+117.66, 0.0155a$^2$-1.2736a+38.833, -0.0379a$^2$+3.4411a-56.493), and

F　　(0.0193a$^2$-2.5362a+104.46, -0.0193a$^2$+1.5362a-4.46, 0.0);

if 47.8<a≤62.9:

a figure surrounded by straight lines OP, PI, IJ, JF, and FO that connect the following 5 points, or on the straight lines IJ and JF (excluding the points O, P, I, and F):

O　　(100-a, 0.0, 0.0),

P　　(0, 0, 100-a),

I　　(-0.01111a$^2$+1.8721a-58.3, 0.0, 0.01111a$^2$-2.8721a+158.3),

J　　(-1.1523a+72.481, 0.1391a+6.7523, 0.0132a+20.7667), and

F　　(0.0013a$^2$-0.9614a+70.124, -0.0013a$^2$-0.0386a+29.876, 0.0); or

if 62.9<a≤74.0:

a figure surrounded by straight lines OP, PI, IF, and FO that connect the following 4 points, or on the straight line IF (excluding the points O, P, I, and F):

O　　(100-a, 0.0, 0.0),

P　　(0, 0, 100-a),

I　　(-0.01111a$^2$+1.8721a-58.3, 0.0, 0.01111a$^2$-2.8721a+158.3), and

F　　(0.0013a$^2$-0.9614a+70.124, -0.0013a$^2$-0.0386a+29.876, 0.0).

Further, the present invention provides (i) the of the above composition as an alternative refrigerant for R410A, (ii) a refrigerating machine comprising the above composition as a working fluid, and (iii) a method for operating a refrigerating machine, comprising circulating the above composition as a working fluid in a refrigerating machine.

Preferred embodiments of the invention are as defined in the appended dependent claims and/or in the following detailed description.

Advantageous Effects of Invention

The refrigerant according to the present disclosure (also referred as "the present refrigerant" herein) has a low GWP.

Brief Description of Drawings

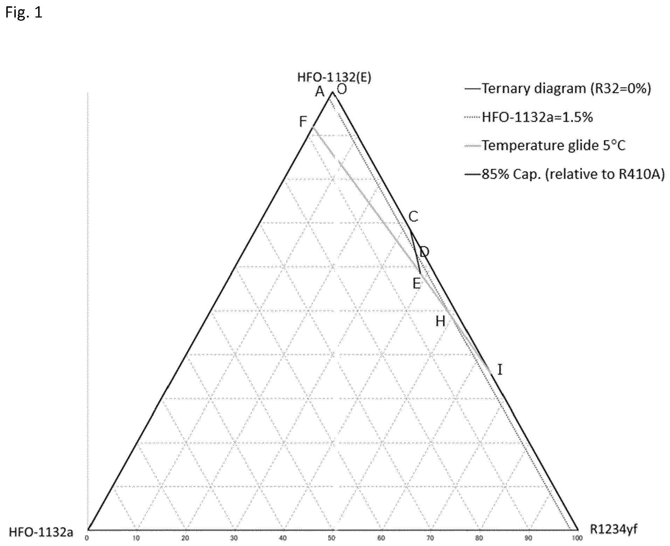

Fig. 1 is a diagram showing points A-F, H, I, and O, and line segments that connect these points to each other in a ternary composition diagram in which the sum of HFO-1132(E), HFO-1132a, and R1234yf is 100 mass%.

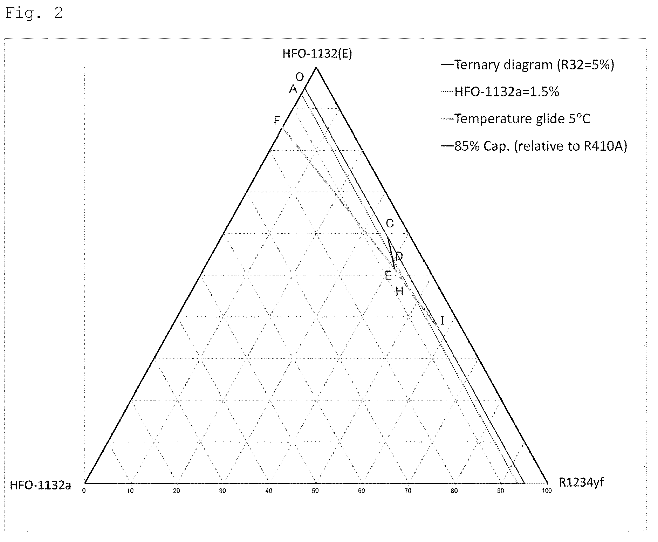

Fig. 2 is a diagram showing points A-F, H, I, and O, and line segments that connect these points to each other in a ternary composition diagram in which the sum of HFO-1132(E), HFO-1132a, and R1234yf is 95 mass% (R32 content is 5 mass%).

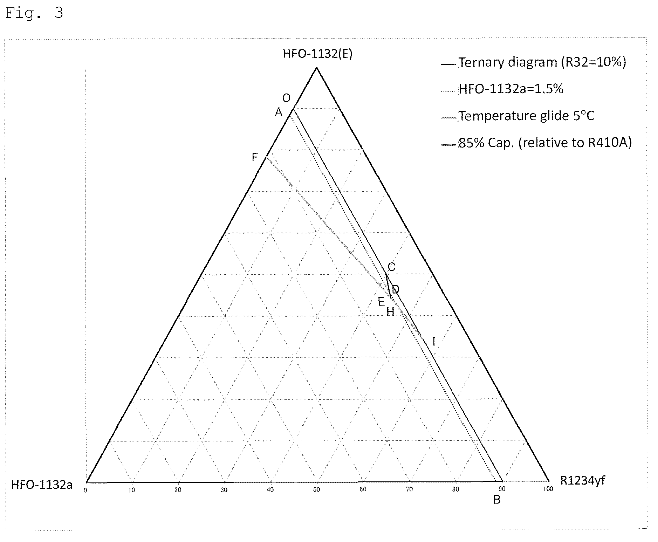

Fig. 3 is a diagram showing points A-F, H, I, and O, and line segments that connect these points to each other in a ternary composition diagram in which the sum of HFO-1132(E), HFO-1132a, and R1234yf is 90 mass% (R32 content is 10 mass%).

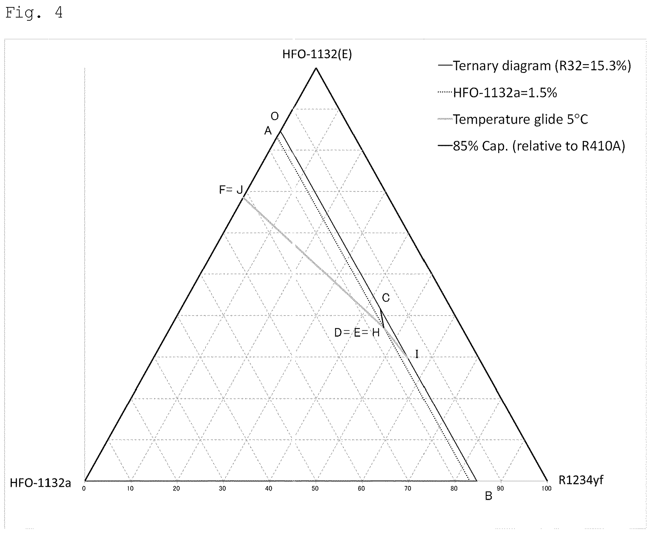

Fig. 4 is a diagram showing points A-F, H, I, and O, and line segments that connect these points to each other in a ternary composition diagram in which the sum of HFO-1132(E), HFO-1132a, and R1234yf is 84.7 mass% (R32 content is 15.3 mass%).

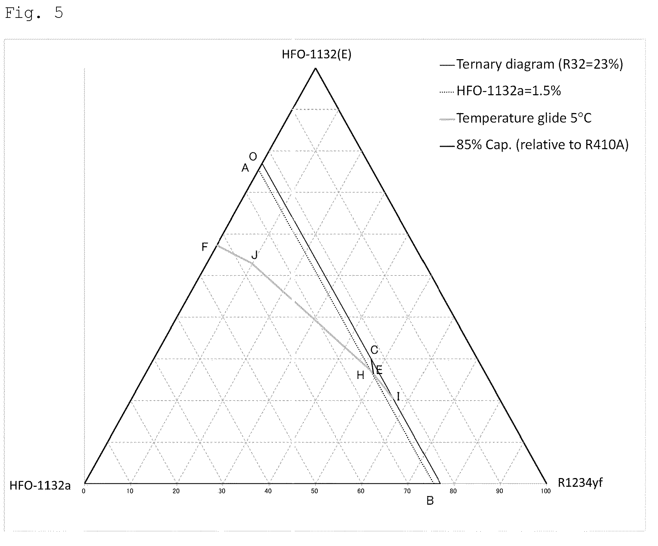

Fig. 5 is a diagram showing points A-F and H-J, and line segments that connect these points to each other in a ternary composition diagram in which the sum of HFO-1132(E), HFO-1132a, and R1234yf is 77 mass% (R32 content is 23 mass%).

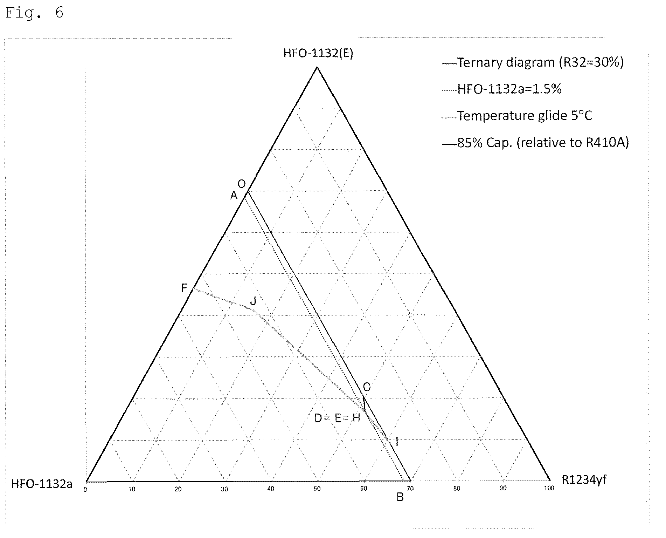

Fig. 6 is a diagram showing points A-F, H-J, and O, and line segments that connect these points to each other in a ternary composition diagram in which the sum of HFO-1132(E), HFO-1132a, and R1234yf is 70 mass% (R32 content is 30 mass%).

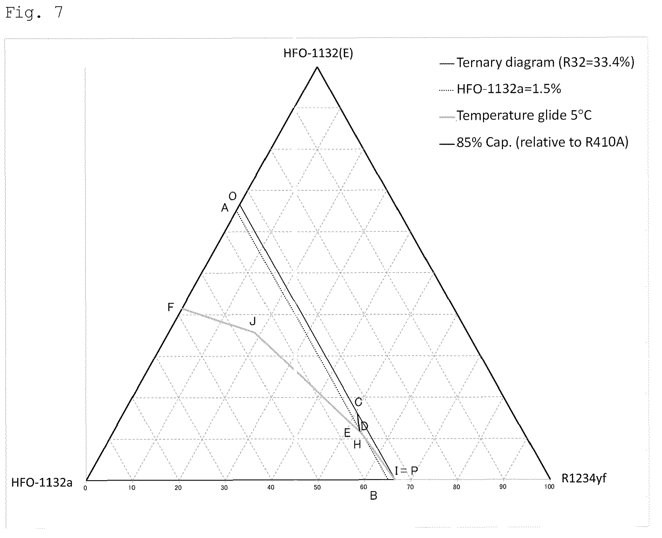

Fig. 7 is a diagram showing points A-F, H-J, O, and P, and line segments that connect these points to each other in a ternary composition diagram in which the sum of HFO-1132(E), HFO-1132a, and R1234yf is 66.6 mass% (R32 content is 33.4 mass%).

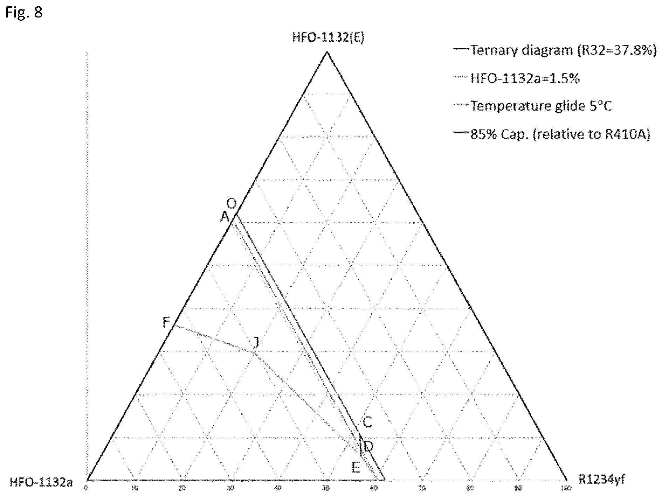

Fig. 8 is a diagram showing points A-F, H-J, O, and P, and line segments that connect these points to each other in a ternary composition diagram in which the sum of HFO-1132(E), HFO-1132a, and R1234yf is 62.2 mass% (R32 content is 37.8 mass%).

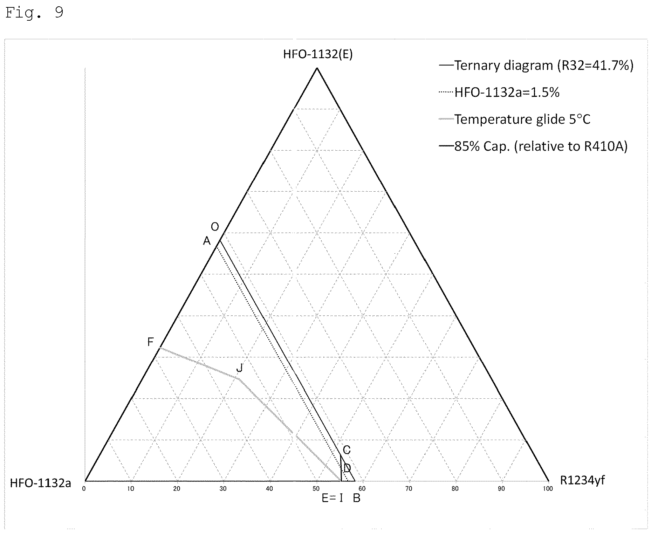

Fig. 9 is a diagram showing points A-F, I, J, O, and P, and line segments that connect these points to each other in a ternary composition diagram in which the sum of HFO-1132(E), HFO-1132a, and R1234yf is 58.3 mass% (R32 content is 41.7 mass%).

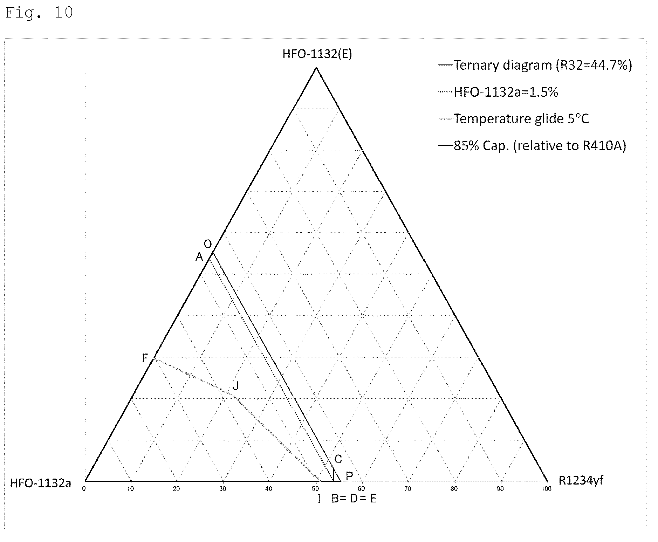

Fig. 10 is a diagram showing points A-F, I, J, O, and P, and line segments that connect these points to each other in a ternary composition diagram in which the sum of HFO-1132(E), HFO-1132a, and R1234yf is 52.2 mass% (R32 content is 47.8 mass%).

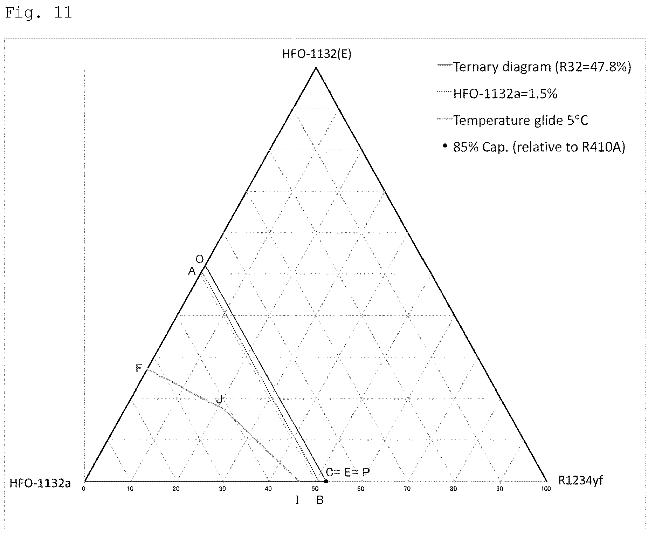

Fig. 11 is a diagram showing points A-C, E, F, I, J, O, and P, and line segments that connect these points to each other in a ternary composition diagram in which the sum of HFO-1132(E), HFO-1132a, and R1234yf is 55.3 mass% (R32 content is 44.7 mass%).

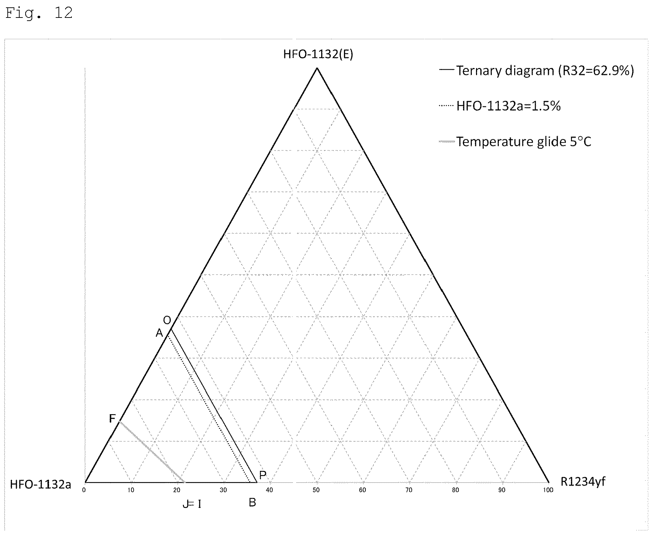

Fig. 12 is a diagram showing points A, B, F, I, J, O, and P, and line segments that connect these points to each other in a ternary composition diagram in which the sum of HFO-1132(E), HFO-1132a, and R1234yf is 37.1 mass% (R32 content is 62.9 mass%).

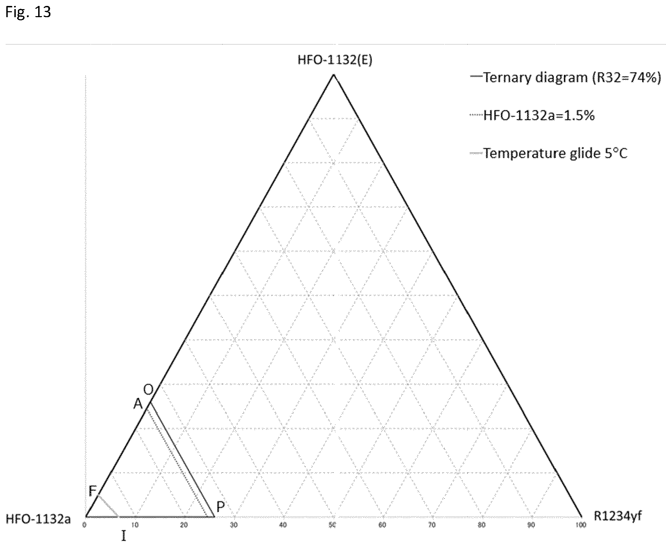

Fig. 13 is a diagram showing points A, B, F, I, O, and P, and line segments that connect these points to each other in a ternary composition diagram in which the sum of HFO-1132(E), HFO-1132a, and R1234yf is 26 mass% (R32 content is 74 mass%).

Description of Embodiments

The present inventors conducted intensive study to solve the above problem, and consequently found that a mixed refrigerant comprising HFO-1132(E), HFO-1132a, and R1234yf, as well as R32 at a specific ratio has the above properties.

The present disclosure has been completed as a result of further research based on this finding. The present disclosure includes the following embodiments.

Definition of Terms

Herein, the term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Examples of non-fluorocarbon compounds include propane (R290), propylene (R1270), butane (R600), isobutane (R600a), carbon dioxide (R744) and ammonia (R717).

Herein, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

Herein, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

Herein, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

1. <u>Refrigerant</u>

1.1 <u>Refrigerant Component</u>

The present refrigerant comprises HFO-1132(E), HFO-1132a, and R1234yf, as well as R32, and is a refrigerant wherein, when the mass% of HFO-1132(E), HFO-1132a, R1234yf, and R32 based on their sum is respectively represented by x, y, z, and a, coordinates (x,y,z) in a ternary composition diagram in which the sum of HFO-1132(E), HFO-1132a, and R1234yf is (100-a) mass% are within the range of
if $0 < a \leq 10.0$:
a figure surrounded by straight lines OC, CD, DE, EF, and FO that connect the following 5 points, or on the straight lines CD, DE, and EF (excluding the points O, C, and F):

| | |
|---|---|
| O | (100-a, 0.0, 0.0), |
| C | ($0.012a^2$-1.96a+68.6, 0.0, $-0.012a^2$+0.96a+31.4), |
| D | ($0.012a^2$-1.88a+63.2, 1.5, $-0.012a^2$+0.88a+35.3), |
| E | ($-0.002a^2$-1.41a+58.6, $0.004a^2$-0.14a+2.9, $-0.002a^2$+0.55a+38.5), and |
| F | ($-0.014a^2$-1.21a+91.9, $0.014a^2$+0.21a+8.1, 0.0); |

if $10.0 < a \leq 15.3$:
a figure surrounded by straight lines OC, CD, DE, EF, and FO that connect the following 5 points, or on the straight lines CD, DE, and EF (excluding the points O, C, and F):

| | |
|---|---|
| O | (100-a, 0.0, 0.0), |
| C | ($0.0104a^2$-1.9043a+68.204, 0.0, $-0.0104a^2$+0.9043a+31.796), |
| D | (-1.6038a+61.638, 1.5, 0.6038a+36.862), |
| E | ($-0.0024a^2$-1.2979a+57.519, $0.0038a^2$-0.1718a+3.2373, $-0.0014a^2$+0.4697a+39.2437), and |
| F | ($0.0046a^2$-1.2626a+76.983, $-0.0046a^2$+0.2626a+23.017, 0.0); |

if $15.3 < a \leq 23.0$:
a figure surrounded by straight lines OC, CE, EH, HJ, JF, and FO that connect the following 6 points, or on the straight lines CE, EH, HJ, and JF (excluding the points O, C, and F):

| | |
|---|---|
| O | (100-a, 0.0, 0.0), |
| C | ($0.0104a^2$-1.9043a+68.204, 0.0, $-0.0104a^2$+0.9043a+31.796), |
| E | ($-0.0024a^2$-1.2979a+57.519, $0.0038a^2$-0.1718a+3.2373, $-0.0014a^2$+0.4697a+39.2437), |

(continued)

H        ($-0.0205a^2-0.4995a+49.548$, 1.5, $0.0205a^2-0.5005a+48.952$),

J        ($-2.026a+99.597$, $-0.2338a+19.677$, $1.2598a-19.274$), and

F        ($0.0046a^2-1.2626a+76.983$, $-0.0046a^2+0.2626a+23.017$, 0.0);

if $23.0<a\leq30.0$:

a figure surrounded by straight lines OC, CE, EH, HJ, JF, and FO that connect the following 6 points. or on the straight lines CE, EH, HJ, and JF (excluding the points O, C, and F):

O        ($100-a$, 0.0, 0.0),

C        ($0.0089a^2-1.8282a+67.247$, 0.0, $-0.0089a^2+0.8282a+32.753$),

E        ($-0.0053a^2-1.1031a+54.592$, $0.0057a^2-0.2755a+4.6013$, $-0.0004a^2+0.3786a+40.8067$),

H        ($-0.0226a^2-0.3009a+46.089$, 1.5, $0.0226a^2-0.6991a+52.411$),

J        ($0.0037a^2-1.8827a+94.336$, $-0.0117a^2+0.4781a+9.5015$, $0.008a^2+0.4046a-3.8375$), and

F        ($-0.0026a^2-0.5259a+58.197$, $0.0026a^2-0.4741a+41.803$, 0.0);

if $30.0<a\leq33.4$:

a figure surrounded by straight lines OC, CD, DE, EJ, JF, and FO that connect the following 6 points, or on the straight lines CD, DE, EJ, and JF (excluding the points O, C, and F):

O        ($100-a$, 0.0, 0.0),

C        ($0.0089a^2-1.8282a+67.247$, 0.0, $-0.0089a^2+0.8282a+32.753$),

D        ($0.0098a^2-1.8547a+63.548$, 1.5, $-0.0098a^2+0.8547a+34.952$),

E        ($-0.0053a^2-1.1031a+54.592$, $0.0057a^2-0.2755a+4.6013$, $-0.0004a^2+0.3786a+40.8067$),

J        ($0.0037a^2-1.8827a+94.336$, $-0.0117a^2+0.4781a+9.5015$, $0.008a^2+0.4046a-3.8375$), and

F        ($-0.0026a^2-0.5259a+58.197$, $0.0026a^2-0.4741a+41.803$, 0.0);

if $33.4<a\leq41.7$:

a figure surrounded by straight lines OC, CD, DE, EJ, JF, and FO that connect the following 6 points, or on the straight lines CD, DE, EJ, and JF (excluding the points O, C, and F):

O        ($100-a$, 0.0, 0.0),

C        ($0.0092a^2-1.8594a+67.944$, 0.0, $-0.0092a^2+0.8594a+32.056$),

D        ($0.0098a^2-1.8547a+63.548$, 1.5, $-0.0098a^2+0.8547a+34.952$),

E        ($-0.00908a^2-0.7415a+46.67$, $0.00793a^2-0.4513a+8.0212$, $0.00115a^2+0.1928a+45.3088$),

J        ($0.00673a^2-1.8435a+89.655$, $0.00347a^2-0.2223a+15.9846$, $-0.0102a^2+1.0658a-5.6396$), and

F        ($0.02462a^2-2.9592a+112.85$, $-0.02462a^2+1.9592a-12.85$, 0.0);

if $41.7<a\leq44.7$:

a figure surrounded by straight lines OC, CD, DI, IJ, JF, and FO that connect the following 6 points, or on the straight lines CD, DI, IJ, and JF (excluding the points O, E, C, and F):

O        ($100-a$, 0.0, 0.0),

C D     ($0.00562a^2-1.554a+61.394$, 0.0, $-0.00562a^2+0.554a+38.606$), ($0.0098a^2-1.8547a+63.548$, 1.5, $-0.0098a^2+0.8547a+34.952$),

I        ($-0.0025a^2+0.6799a-20.96$, 0.0, $0.0025a^2-1.6799a+120.96$),

J        ($0.0224a^2-3.1675a+117.66$, $0.0155a^2-1.2736a+38.833$, $-0.0379a^2+3.4411a-56.493$), and

F        ($0.0193a^2-2.5362a+104.46$, $-0.0193a^2+1.5362a-4.46$, 0.0);

if $44.7<a\leq47.8$:

a figure surrounded by straight lines OC, CE, EI, IJ, JF, and FO that connect the following 6 points, or on the straight lines CE, IJ, and JF (excluding the points O, E, C, and F):

O     (100-a, 0.0, 0.0),
C     ($0.00562a^2$-1.554a+61.394, 0.0, $-0.00562a^2$+0.554a+38.606),
E     (0.0, $0.00263a^2$-0.7285a+28.779, $-0.00263a^2$-0.2715a+71.221),
I     ($-0.0025a^2$+0.6799a-20.96, 0.0, $0.0025a^2$-1.6799a+120.96),
J     ($0.0224a^2$-3.1675a+117.66, $0.0155a^2$-1.2736a+38.833, $- 0.0379a^2$+3.4411a-56.493), and
F     ($0.0193a^2$-2.5362a+104.46, $-0.0193a^2$+1.5362a-4.46, 0.0);

if $47.8<a\leq62.9$:
a figure surrounded by straight lines OP, PI, IJ, JF, and FO that connect the following 5 points, or on the straight lines IJ and JF (excluding the points O, P, I, and F):

O     (100-a, 0.0, 0.0),
P     (0, 0, 100-a),
I     ($-0.01111a^2$+1.8721a-58.3, 0.0, $0.01111a^2$-2.8721a+158.3),
J     (-1.1523a+72.481, 0.1391a+6.7523, 0.0132a+20.7667), and
F     ($0.0013a^2$-0.9614a+70.124, $-0.0013a^2$-0.0386a+29.876, 0.0); or

if $62.9<a\leq74.0$:
a figure surrounded by straight lines OP, PI, IF, and FO that connect the following 4 points, or on the straight line IF (excluding the points O, P, I, and F):

O     (100-a, 0.0, 0.0),
P     (0, 0, 100-a),
I     ($-0.01111a^2$+1.8721a-58.3, 0.0, $0.01111a^2$-2.8721a+158.3), and
F     ($0.0013a^2$-0.9614a+70.124, $-0.0013a^2$-0.0386a+29.876, 0.0).

In this case, the present refrigerant has a refrigerating capacity ratio of $\geq$ 85% relative to that of R410A, and a temperature glide of $\leq$ 5°C.

The present composition may further comprise R1234ze.

The present refrigerant may further comprise other additional refrigerants in addition to HFO-1132(E), HFO-1132a, R1234yf, and R32 as long as the above properties and effects are not impaired. In this respect, the present refrigerant preferably comprises HFO-1132(E), HFO-1132a, R1234yf, and R32 in a total amount of $\geq$ 99.5 mass%, more preferably $\geq$ 99.75 mass%, and still more preferably $\geq$ 99.9 mass%, based on the entire refrigerant. In another embodiment, the present refrigerant preferably comprises HFO-1132(E), HFO-1132a, R32, R1234yf, and R1234ze in a total amount of $\geq$ 99.5 mass%, more preferably $\geq$ 99.75 mass%, and even more preferably $\geq$ 99.9 mass%, based on the entire refrigerant.

Additional refrigerants are not particularly limited and can be widely selected. The mixed refrigerant may contain one additional refrigerant, or two or more additional refrigerants.

### 1.2. Use

The present refrigerant can be preferably used as a working fluid in a refrigerating machine.

The present composition is suitable for use as an alternative refrigerant for R410A.

### 2. Refrigerant Composition

The present refrigerant composition comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 0-1 mass%, and more preferably 0-0.1 mass%.

2.1. Water

The present refrigerant composition may contain a small amount of water. The water content of the refrigerant composition is preferably ≤0.1 mass% based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

2.2. Tracer

A tracer is added to the present refrigerant composition at a detectable concentration such that when the refrigerant composition has been diluted, contaminated, or undergone other changes, the tracer can trace the changes.
The present refrigerant composition may comprise a single tracer, or two or more tracers.
The tracer is not limited, and can be suitably selected from commonly used tracers.
Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$). The tracer is particularly preferably a hydrofluorocarbon, a hydrochlorofluorocarbon, a chlorofluorocarbon, a hydrochlorocarbon, a fluorocarbon, or a fluoroether.
The following compounds are preferable as the tracer.

FC-14 (tetrafluoromethane, $CF_4$),
HCC-40 (chloromethane, $CH_3Cl$),
HFC-23 (trifluoromethane, $CHF_3$),
HFC-41 (fluoromethane, $CH_3Cl$),
HFC-125 (pentafluoroethane, $CF_3CHF_2$),
HFC-134a (1,1,1,2-tetrafluoroethane, $CF_3CH_2F$),
HFC-134 (1,1,2,2-tetrafluoroethane, $CHF_2CHF_2$),
HFC-143a (1,1,1-trifluoroethane, $CF_3CH_3$),
HFC-143 (1,1,2-trifluoroethane, $CHF_2CH_2F$),
HFC-152a (1,1-difluoroethane, $CHF_2CH_3$),
HFC-152 (1,2-difluoroethane, $CH_2FCH_2F$),
HFC-161 (fluoroethane, $CH_3CH_2F$),
HFC-245fa (1,1,1,3,3-pentafluoropropane, $CF_3CH_2CHF_2$),
HFC-236fa (1,1,1,3,3,3-hexafluoropropane, $CF_3CH_2CF_3$),
HFC-236ea (1,1,1,2,3,3-hexafluoropropane, $CF_3CHFCHF_2$),
HFC-227ea (1,1,1,2,3,3,3-heptafluoropropane, $CF_3CHFCF_3$),
HCFC-22 (chlorodifluoromethane, $CHClF_2$),
HCFC-31 (chlorofluoromethane, $CH_2ClF$),
CFC-1113 (chlorotrifluoroethylene, $CF_2=CClF$),
HFE-125 (trifluoromethyl-difluoromethyl ether, $CF_3OCHF_2$),
HFE-134a (trifluoromethyl-fluoromethyl ether, $CF_3OCH_2F$),
HFE-143a (trifluoromethyl-methyl ether, $CF_3OCH_3$),
HFE-227ea (trifluoromethyl-tetrafluoroethyl ether, $CF_3OCHFCF_3$),
HFE-236fa (trifluoromethyl-trifluoroethyl ether, $CF_3OCH_2CF_3$),

The present refrigerant composition may contain one or more tracers at a total concentration of 10-1000 parts per million by weight (ppm), preferably 30-500 ppm, and more preferably 50-300 ppm, based on the entire refrigerant composition.

2.3. Ultraviolet Fluorescent Dye

The present refrigerant composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present refrigerant composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited, and generally is preferably 0.01-5 mass%, and more preferably 0.05-2 mass%, based on the entire refrigerant.

### 2.5. Polymerization Inhibitor

The present refrigerant composition may comprise a single polymerization inhibitor, or two or more polymerization-tion inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited, and generally is preferably 0.01-5 mass%, and more preferably 0.05-2 mass%, based on the entire refrigerant.

### 3. Refrigeration Oil-Containing Working Fluid

The refrigeration oil-containing working fluid according to the present disclosure (also referred to as "the present working fluid" herein) comprises at least the present refrigerant or refrigerant composition and a refrigeration oil, for use as a working fluid in a refrigerating machine. Specifically, the present working fluid is obtained by mixing a refrigeration oil used in a compressor of a refrigerating machine with the refrigerant or the refrigerant composition. The present working fluid generally comprises 10-50 mass% of refrigeration oil.

### 3.1. Refrigeration Oil

The present working fluid may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from polyalkylene glycols (PAG), polyol esters (POE), and polyvinyl ethers (PVE).

The refrigeration oil may further contain additives in addition to the base oil. The additive may be at least one member selected from antioxidants, extreme-pressure agents, acid scavengers, oxygen scavengers, copper deactivators, rust inhibitors, oil agents, and antifoaming agents.

A refrigeration oil with a kinematic viscosity of $(5\text{-}400) \times 10^{-6}$ m$^2$/s (5-400 cSt) at 40°C is preferable from the standpoint of lubrication.

The present working fluid may further optionally contain at least one additive. Examples of additives include compatibilizing agents described below.

### 3.2. Compatibilizing Agent

The present working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

4. Method for Operating Refrigerating Machine

The method for operating a refrigerating machine according to the present disclosure (also referred to as "the present method" herein) is a method for operating a refrigerating machine using the present refrigerant.

Specifically, the present method comprises circulating the present refrigerant in a refrigerating machine.

Examples

The present disclosure is described in more detail below with reference to Examples.

Mixed refrigerants were prepared by mixing HFO-1132(E), R32, R1234ze, and $CO_2$ at mass% based on their sum shown in Tables 1-13.

The GWP of R410A (R32 = 50%/R125 = 50%) and the mixed refrigerants was evaluated based on the values stated in the Intergovernmental Panel on Climate Change (IPCC), fourth report. The GWP of HFO-1132(E), which was not stated in the report, was assumed to be 1 from HFO-1132a (GWP = 1 or less) and HFO-1132a (GWP = 0.3, described in WO 2015/141678). The refrigerating capacity of R410A and the mixed refrigerants was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

The COP ratio and the refrigerating capacity ratio of the mixed refrigerants relative to those of R410A were determined. The calculation conditions were as follows.

> Evaporating temperature: 5°C
> Condensation temperature: 45°C
> Degree of superheating: 5 K
> Degree of subcooling: 5 K
> Compressor efficiency: 70%

Tables 1-13 show these values together with the GWP of each mixed refrigerant. The COP and refrigerating capacity are ratios relative to R410A.

The coefficient of performance (COP) was calculated according to the following equation.

COP = (refrigerating capacity or heating capacity)/amount of electrical power consumed

Table 1

| Item | Unit | Com Ex1 | Com Ex2 | Com Ex3 | Com Ex4 | Example1 | Example2 | Com Ex5 | Com Ex6 | Com Ex7 |
|---|---|---|---|---|---|---|---|---|---|---|
| | | | A | B | C | D | E | F | H | I |
| HFO-1132 (E) | mass% | R410A | 98.5 | 0.0 | 68.6 | 63.2 | 58.6 | 91.9 | 49.0 | 35.7 |
| HFO-1132a | mass% | | 1.5 | 1.5 | 0.0 | 1.5 | 2.9 | 8.1 | 1.5 | 0.0 |
| R1234yf | mass% | | 0.0 | 98.5 | 31.4 | 35.3 | 38.5 | 0.0 | 48.5 | 64.3 |
| R32 | mass% | | 0.0 | 0.0 | 0.0 | 0.0 | 0.0 | 0.0 | 0.0 | 0.0 |
| GWP | - | 2088 | 1 | 4 | 2 | 2 | 2 | 1 | 2 | 3 |
| COP ratio | % (relative to R410A) | 100 | 99 | 104 | 100 | 99 | 99 | 95 | 100 | 102 |

(continued)

| Item | Unit | Com Ex1 | Com Ex2 | Com Ex3 | Com Ex4 | Example1 | Example2 | Com Ex5 | Com Ex6 | Com Ex7 |
|---|---|---|---|---|---|---|---|---|---|---|
| | | | A | B | C | D | E | F | H | I |
| Refrigerating capacity ratio | % (relative to R410A) | 100 | 100 | 44 | 85 | 85 | 85 | 109 | 78 | 68 |
| Condensation glide | K | 0.1 | 1.2 | 2.2 | 2.0 | 3.6 | 5.0 | 5.0 | 5.0 | 5.0 |
| Evaporation glide | K | 0.1 | 0.7 | 1.0 | 2.0 | 3.1 | 4.1 | 3.6 | 4.4 | 4.7 |

Table 2

| Item | Unit | Com Ex8 | Com Ex9 | Com Ex10 | Example3 | Example4 | Com Ex10 | Com Ex11 | Com Ex12 |
|---|---|---|---|---|---|---|---|---|---|
| | | A | B | C | D | E | F | H | I |
| HFO-1132 (E) | mass% | 93.5 | 0.0 | 59.1 | 54.1 | 51.5 | 85.5 | 46.7 | 36.9 |
| HFO-1132a | mass% | 1.5 | 1.5 | 0.0 | 1.5 | 2.3 | 9.5 | 1.5 | 0.0 |
| R1234yf | mass% | 0.0 | 93.5 | 35.9 | 39.4 | 41.2 | 0.0 | 46.8 | 58.1 |
| R32 | mass% | 5.0 | 5.0 | 5.0 | 5.0 | 5.0 | 5.0 | 5.0 | 5.0 |
| GWP | - | 35 | 38 | 36 | 36 | 36 | 35 | 36 | 36 |
| COP ratio | % (relative to R410A) | 98 | 104 | 100 | 99 | 99 | 94 | 100 | 101 |
| Refrigerating capacity ratio | % (relative to R410A) | 102 | 50 | 85 | 85 | 85 | 112 | 81 | 73 |
| Condensation glide | K | 1.3 | 6.1 | 2.7 | 4.2 | 5.0 | 5.0 | 5.0 | 5.0 |
| Evaporation glide | K | 0.8 | 3.6 | 2.7 | 3.8 | 4.4 | 4.0 | 4.5 | 4.8 |

Table 3

| Item | Unit | Com Ex13 | Com Ex14 | Com Ex15 | Example5 | Example6 | Com Ex16 | Com Ex17 | Com Ex18 |
|---|---|---|---|---|---|---|---|---|---|
| | | A | B | C | D | E | F | H | I |
| HFO-1132 (E) | mass% | 88.5 | 0.0 | 50.2 | 45.6 | 44.3 | 78.4 | 42.5 | 34.4 |
| HFO-1132a | mass% | 1.5 | 1.5 | 0.0 | 1.5 | 1.9 | 11.6 | 1.5 | 0.0 |
| R1234yf | mass% | 0.0 | 88.5 | 39.8 | 42.9 | 43.8 | 0.0 | 46.0 | 55.6 |
| R32 | mass% | 10.0 | 10.0 | 10.0 | 10.0 | 10.0 | 10.0 | 10.0 | 10.0 |
| GWP | - | 68 | 71 | 70 | 70 | 70 | 68 | 70 | 70 |
| COP ratio | % (relative to R410A) | 98 | 104 | 100 | 99 | 99 | 93 | 99 | 101 |

(continued)

| Item | Unit | Com Ex13 | Com Ex14 | Com Ex15 | Example5 | Example6 | Com Ex16 | Com Ex17 | Com Ex18 |
|---|---|---|---|---|---|---|---|---|---|
| | | A | B | C | D | E | F | H | I |
| Refrigerating capacity ratio | % (relative to R410A) | 104 | 56 | 85 | 85 | 85 | 116 | 83 | 77 |
| Condensation glide | K | 1.2 | 7.6 | 3.3 | 4.7 | 5.0 | 5.0 | 5.0 | 5.0 |
| Evaporation glide | K | 0.9 | 5.3 | 3.3 | 4.3 | 4.6 | 4.3 | 4.6 | 4.8 |

Table 4

| Item | Unit | Com Ex19 | Com Ex20 | Com Ex21 | Example7 | Com Ex2 2 | Com Ex230 |
|---|---|---|---|---|---|---|---|
| | | A | B | C | D=E=H | F | I |
| HFO-1132 (E) | mass% | 83.2 | 0.0 | 41.5 | 37.1 | 68.6 | 29.7 |
| HFO-1132a | mass% | 1.5 | 1.5 | 0.0 | 1.5 | 16.1 | 0.0 |
| R1234yf | mass% | 0.0 | 83.2 | 43.2 | 46.1 | 0.0 | 55.0 |
| R32 | mass% | 15.3 | 15.3 | 15.3 | 15.3 | 15.3 | 15.3 |
| GWP | - | 104 | 107 | 105 | 106 | 104 | 106 |
| COP ratio | % (relative to R410A) | 98 | 103 | 100 | 99 | 91 | 101 |
| Refrigerating capacity ratio | % (relative to R410A) | 106 | 62 | 85 | 85 | 121 | 79 |
| Condensation glide | K | 1.1 | 7.9 | 3.7 | 5.0 | 5.0 | 5.0 |
| Evaporation glide | K | 0.8 | 6.2 | 3.7 | 4.7 | 5.0 | 4.9 |

Table 5

| Item | Unit | Com Ex24 | Com Ex25 | Com Ex26 | Example8 | Com Ex27 | Example9 | Example10 | Com Ex28 |
|---|---|---|---|---|---|---|---|---|---|
| | | A | B | C | E | F | J | H | I |
| HFO-1132 (E) | mass% | 75.5 | 0.0 | 29.9 | 26.4 | 57.3 | 53.0 | 27.2 | 20.5 |
| HFO-1132a | mass% | 1.5 | 1.5 | 0.0 | 1.3 | 19.7 | 14.3 | 1.5 | 0.0 |
| R1234yf | mass% | 0.0 | 75.5 | 47.1 | 49.3 | 0.0 | 9.7 | 48.3 | 56.5 |
| R32 | mass% | 23.0 | 23.0 | 23.0 | 23.0 | 23.0 | 23.0 | 23.0 | 23.0 |
| GWP | - | 156 | 158 | 157 | 157 | 156 | 156 | 157 | 158 |
| COP ratio | % (relative to R410A) | 98 | 103 | 100 | 100 | 89 | 92 | 100 | 101 |
| Refrigerating capacity ratio | % (relative to R410A) | 108 | 69 | 85 | 85 | 125 | 117 | 86 | 80 |
| Condensation glide | K | 1.0 | 7.2 | 4.0 | 5.0 | 4.5 | 5.0 | 5.0 | 5.0 |
| Evaporation glide | K | 0.7 | 6.3 | 4.1 | 4.8 | 5.0 | 5.0 | 4.8 | 4.9 |

Table 6

| Item | Unit | Com Ex29 | Com Ex30 | Com Ex31 | Example10 | Com Ex32 | Examplell | Com Ex33 |
|---|---|---|---|---|---|---|---|---|
| | | A | B | C | D = E = H | F | J | I |
| HFO-1132 (E) | mass% | 68.5 | 0.0 | 20.4 | 16.7 | 46.5 | 41.2 | 9.2 |
| HFO-1132a | mass% | 1.5 | 1.5 | 0.0 | 1.5 | 23.5 | 13.3 | 0.0 |
| R1234yf | mass% | 0.0 | 58.5 | 49.6 | 51.8 | 0.0 | 15.5 | 60.8 |
| R32 | mass% | 30.0 | 30.0 | 30.0 | 30.0 | 30.0 | 30.0 | 30.0 |
| GWP | - | 203 | 205 | 205 | 205 | 203 | 204 | 205 |
| COP ratio | % (relative to R410A) | 98 | 102 | 101 | 100 | 88 | 94 | 97 |
| Refrigerating capacity ratio | % (relative to R410A) | 110 | 74 | 85 | 85 | 129 | 115 | 102 |
| Condensation glide | K | 0.8 | 6.2 | 4.0 | 5.0 | 4.0 | 5.0 | 5.0 |
| Evaporation glide | K | 0.6 | 5.7 | 4.1 | 4.8 | 5.0 | 5.0 | 4.9 |

Table 7

| Item | Unit | Com Ex35 | Com Ex36 | Com Ex37 | Example12 | Example13 | Com Ex38 | Example14 | Com Ex39 | Com Ex40 |
|---|---|---|---|---|---|---|---|---|---|---|
| | | A | B | C | D | E | F | J | H | I |
| HFO-1132 (E) | mass% | 65.1 | 0.0 | 16.1 | 12.5 | 11.8 | 41.5 | 35.6 | 108 | 0.0 |
| HFO-1132a | mass% | 1.5 | 1.5 | 0.0 | 1.5 | 1.8 | 25.1 | 12.4 | 1.5 | 0.0 |
| R1234yf | mass% | 0.0 | 65.1 | 50.5 | 52.6 | 53.0 | 0.0 | 18.6 | 54.3 | 66.6 |
| R32 | mass% | 33.4 | 33.4 | 33.4 | 33.4 | 33.4 | 33.4 | 33.4 | 33.4 | 33.4 |
| GWP | | 226 | 228 | 228 | 228 | 228 | 226 | 227 | 228 | 228 |
| COP ratio | % (relative to R410A) | 98 | 102 | 101 | 101 | 101 | 88 | 95 | 101 | 102 |
| Refrigerating capacity ratio | % (relative to R410A) | 111 | 77 | 85 | 85 | 85 | 130 | 113 | 84 | 75 |
| Condensation glide | K | 0.7 | 5.7 | 4.0 | 4.9 | 5.0 | 3.9 | 5.0 | 5.0 | 5.0 |
| Evaporation glide | K | 0.6 | 5.3 | 3.9 | 4.7 | 4.8 | 5.0 | 5.0 | 4.8 | 4.8 |

Table 8

| Item | Unit | Com Ex41 | Com Ex42 | Com Ex43 | Example15 | Examplel6 | Com Ex44 | Example17 |
|---|---|---|---|---|---|---|---|---|
| | | A | B=H=I | C | D | E | F | J |
| HFO-1132 (E) | mass% | 60.7 | 0.0 | 10.8 | 7.4 | 5.7 | 36.2 | 29.6 |
| HFO-1132a | mass% | 1.5 | 1.5 | 0.0 | 1.5 | 2.3 | 26.0 | 12.5 |
| R1234yf | mass% | 0.0 | 60.7 | 51.4 | 53.3 | 54.2 | 0.0 | 20.1 |
| R32 | mass% | 37.8 | 37.8 | 37.8 | 37.8 | 37.8 | 37.8 | 37.8 |

(continued)

| Item | Unit | Com Ex41 | Com Ex42 | Com Ex43 | Example15 | Examplel6 | Com Ex44 | Example17 |
|---|---|---|---|---|---|---|---|---|
| | | A | B=H=I | C | D | E | F | J |
| GWP | - | 256 | 258 | 257 | 257 | 257 | 256 | 256 |
| COP ratio | % (relative to R410A) | 98 | 102 | 101 | 101 | 101 | 89 | 95 |
| Refrigerating capacity ratio | % (relative to R410A) | 112 | 80 | 85 | 85 | 85 | 131 | 113 |
| Condensation glide | K | 0.7 | 5.0 | 3.8 | 4.6 | 5.0 | 3.8 | 5.0 |
| Evaporation glide | K | 0.5 | 4.7 | 3.7 | 4.4 | 4.7 | 5.0 | 5.0 |

Table 9

| Item | Unit | Com Ex45 | Com Ex46 | Com Ex47 | Example18 | Example19 | Com Ex48 | Example20 |
|---|---|---|---|---|---|---|---|---|
| | | A | B | C | D | E=I | F | J |
| HFO-1132 (E) | mass% | 56.8 | 0.0 | 6.4 | 3.1 | 0.0 | 32.3 | 24.5 |
| HFO-1132a | mass% | 1.5 | 1.5 | 0.0 | 1.5 | 3.0 | 26.0 | 12.7 |
| R1234yf | mass% | 0.0 | 56.8 | 51.9 | 53.7 | 55.3 | 0.0 | 21.1 |
| R32 | mass% | 41.7 | 41.7 | 41.7 | 41.7 | 41.7 | 41.7 | 41.7 |
| GWP | - | 282 | 284 | 284 | 284 | 284 | 282 | 283 |
| COP ratio | % (relative to R410A) | 98 | 102 | 102 | 101 | 101 | 89 | 96 |
| Refrigerating capacity ratio | % (relative to R410A) | 112 | 83 | 85 | 85 | 85 | 132 | 112 |
| Condensation glide | K | 0.6 | 4.4 | 3.5 | 4.3 | 5.0 | 3.8 | 5.0 |
| Evaporation glide | K | 0.5 | 4.2 | 3.5 | 4.1 | 4.6 | 5.0 | 5.0 |

Table 10

| Item | Unit | Com Ex49 | Com Ex50 | Com Ex52 | Com Ex52 | Example21 | Com Ex53 |
|---|---|---|---|---|---|---|---|
| | | A | B=D=E | C | F | J | I |
| HFO-1132 (E) | mass% | 53.8 | 0.0 | 3.2 | 29.7 | 20.8 | 0.0 |
| HFO-1132a | mass% | 1.5 | 1.5 | 0.0 | 25.6 | 12.9 | 4.4 |
| R1234yf | mass% | 0.0 | 53.8 | 52.1 | 0.0 | 21.6 | 50.9 |
| R32 | mass% | 44.7 | 44.7 | 44.7 | 44.7 | 44.7 | 44.7 |
| GWP | - | 302 | 304 | 304 | 302 | 303 | 304 |

(continued)

| Item | Unit | Com Ex49 | Com Ex50 | Com Ex52 | Com Ex52 | Example21 | Com Ex53 |
|---|---|---|---|---|---|---|---|
| | | A | B=D=E | C | F | J | I |
| COP ratio | % (relative to R410A) | 98 | 102 | 102 | 90 | 96 | 101 |
| Refrigerating capacity ratio | % (relative to R410A) | 113 | 85 | 85 | 132 | 113 | 89 |
| Condensation glide | K | 0.6 | 4.0 | 3.3 | 3.9 | 5.0 | 5.0 |
| Evaporation glide | K | 0.5 | 3.8 | 3.2 | 5.0 | 5.0 | 4.6 |

Table 11

| Item | Unit | Com Ex54 | Com Ex55 | Com Ex56 | Com Ex57 | Example22 | Com Ex58 |
|---|---|---|---|---|---|---|---|
| | | A | B | C=D=E | F | J | I |
| HFO-1132 (E) | mass% | 50.7 | 0.0 | 0.0 | 27.1 | 17.4 | 0.0 |
| HFO-1132a | mass% | 1.5 | 1.5 | 0.0 | 25.1 | 13.4 | 5.8 |
| R1234yf | mass% | 0.0 | 50.7 | 52.2 | 0.0 | 21.4 | 46.4 |
| R32 | mass% | 47.8 | 47.8 | 47.8 | 47.8 | 47.8 | 47.8 |
| GWP | - | 323 | 325 | 325 | 323 | 324 | 325 |
| COP ratio | % (relative to R410A) | 98 | 102 | 102 | 91 | 96 | 100 |
| Refrigerating capacity ratio | % (relative to R410A) | 113 | 87 | 85 | 132 | 113 | 93 |
| Condensation glide | K | 0.6 | 3.6 | 3.1 | 3.9 | 5.0 | 5.0 |
| Evaporation glide | K | 0.5 | 3.4 | 3.0 | 5.0 | 5.0 | 4.5 |

Table 12

| Item | Unit | Com Ex59 | Com Ex60 | Com Ex61 | Com Ex62 | Com Ex63 | Com Ex64 | Com Ex65 | Com Ex66 |
|---|---|---|---|---|---|---|---|---|---|
| | | A | B | F | J=I | A | B | F | I |
| HFO-1132 (E) | mass% | 35.6 | 0.0 | 14.8 | 0.0 | 24.5 | 0.0 | 5.0 | 0.0 |
| HFO-1132a | mass% | 1.5 | 1.5 | 22.3 | 15.5 | 1.5 | 1.5 | 21.0 | 19.4 |
| R1234yf | mass% | 0.0 | 35.6 | 0.0 | 21.6 | 0.0 | 24.5 | 0.0 | 6.6 |
| R32 | mass% | 62.9 | 62.9 | 62.9 | 62.9 | 74.0 | 74.0 | 74.0 | 74.0 |
| GWP | - | 425 | 426 | 425 | 426 | 500 | 500 | 500 | 500 |
| COP ratio | % (relative to R410A) | 99 | 102 | 94 | 98 | 100 | 102 | 96 | 97 |
| Refrigerating capacity ratio | % (relative to R410A) | 114 | 96 | 130 | 114 | 114 | 101 | 128 | 124 |
| Condensation glide | K | 0.6 | 2.2 | 4.1 | 5.0 | 0.7 | 1.5 | 4.3 | 4.5 |
| Evaporation glide | K | 0.6 | 1.9 | 5.0 | 5.0 | 0.7 | 1.3 | 5.0 | 5.0 |

Table 13

| Item | Unit | Com Ex4 C | Example23 | Example24 | Example25 | Example26 | Example27 | Example28 | Example29 |
|---|---|---|---|---|---|---|---|---|---|
| HFO-1132 (E) | mass% | 68.6 | 68.6 | 68.6 | 68.6 | 68.6 | 68.6 | 68.6 | 68.6 |
| HFO-1132a | mass% | 0.0 | 0.5 | 1.0 | 1.5 | 2.0 | 3.0 | 4.0 | 4.3 |
| R1234yf | mass% | 31.4 | 30.9 | 30.4 | 29.9 | 29.4 | 28.4 | 27.4 | 27.1 |
| R32 | mass% | 0.0 | 0.0 | 0.0 | 0.0 | 0.0 | 0.0 | 0.0 | 0.0 |
| GWP | - | 2 | 2 | 2 | 2 | 2 | 2 | 2 | 2 |
| COP ratio | % (relative to R410A) | 100.0 | 99.7 | 99.4 | 99.1 | 98.8 | 98.3 | 97.7 | 97.6 |
| Refrigerating capacity ratio | % (relative to R410A) | 85.0 | 85.9 | 86.7 | 87.6 | 88.4 | 90.1 | 91.8 | 92.3 |
| Condensation glide | K | 2.0 | 2.4 | 2.8 | 3.2 | 3.5 | 4.2 | 4.8 | 5.0 |
| Evaporation glide | K | 2.0 | 2.2 | 2.4 | 2.7 | 2.9 | 3.3 | 3.7 | 3.8 |

EP 3 992 546 B1

These results indicate that the refrigerant has a refrigerating capacity ratio of ≥ 85% relative to that of R410A, and a temperature glide of ≤ 5°C under the following conditions. In the mixed refrigerant, when the mass% of HFO-1132(E), HFO-1132a, R1234yf, and R32 based on their sum is respectively represented by x, y, z, and a, coordinates (x,y,z) in a ternary composition diagram in which the sum of HFO-1132(E), HFO-1132a, and R1234yf is (100-a) mass% are within the ranges specified in the section "Solution of Problem" above.

Approximate expressions showing the coordinates of each point were determined in the following manner.

Table 14

| Point A approximate expression | | | | | | | | | | |
|---|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 98.5 | 93.5 | 88.5 | 88.5 | 83.2 | 75.5 | 75.5 | 68.5 | 65.1 |
| HFO-1132a | mass% | 1.5 | 1.5 | 1.5 | 1.5 | 1.5 | 1.5 | 1.5 | 1.5 | 1.5 |
| R1234yf | mass% | 0.0 | 0.0 | 0.0 | 0.0 | 0.0 | 0.0 | 0.0 | 0.0 | 0.0 |
| x=R32 | | x | | | x | | | x | | |
| HFO-1132E approximate expression | | -x+98.5 | | | -x+98.5 | | | -x+98.5 | | |
| HFO-1132a approximate expression | | 1.5 | | | 1.5 | | | 1.5 | | |
| R1234yf approximate expression | | 0.0 | | | 0.0 | | | 0.0 | | |

| R32 | mass% | 33.4 | 37.8 | 41.7 | 41.7 | 44.7 | 47.8 | 47.8 | 62.9 | 74.0 |
|---|---|---|---|---|---|---|---|---|---|---|
| HFO-1132E | mass% | 65.1 | 60.7 | 56.8 | 56.8 | 53.8 | 50.7 | 50.7 | 35.6 | 24.5 |
| HFO-1132a | mass% | 1.5 | 1.5 | 1.5 | 1.5 | 1.5 | 1.5 | 1.5 | 1.5 | 1.5 |
| R1234yf | mass% | 0.0 | 0.0 | 0.0 | 0.0 | 0.0 | 0.0 | 0.0 | 0.0 | 0.0 |
| x=R32 | | x | | | x | | | x | | |
| HFO-1132E approximate expression | | -x+98.5 | | | -x+98.5 | | | -x+98.5 | | |
| HFO-1132a approximate expression | | 1.5 | | | 1.5 | | | 1.5 | | |
| R1234yf approximate expression | | 0.0 | | | 0.0 | | | 0.0 | | |

Table 15

| Point B approximate expression | | | | | | | | | | |
|---|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 0.0 | 0.0 | 0.0 | 0.0 | 0.0 | 0.0 | 0.0 | 0.0 | 0.0 |
| HFO-1132a | mass% | 1.5 | 1.5 | 1.5 | 1.5 | 1.5 | 1.5 | 1.5 | 1.5 | 1.5 |
| R1234yf | mass% | 98.5 | 93.5 | 88.5 | 88.5 | 83.2 | 75.5 | 75.5 | 68.5 | 65.1 |
| x=R32 | | x | | | x | | | x | | |
| HFO-1132E approximate expression | | 0.0 | | | 0.0 | | | 0.0 | | |
| HFO-1132a approximate expression | | 1.5 | | | 1.5 | | | 1.5 | | |
| R1234yf approximate expression | | -x+98.5 | | | -x+98.5 | | | -x+98.5 | | |

| R32 | mass% | 33.4 | 37.8 | 41.7 | 41.7 | 44.7 | 47.8 | 47.8 | 62.9 | 74.0 |
|---|---|---|---|---|---|---|---|---|---|---|
| HFO-1132E | mass% | 0.0 | 0.0 | 0.0 | 0.0 | 0.0 | 0.0 | 0.0 | 0.0 | 0.0 |
| HFO-1132a | mass% | 1.5 | 1.5 | 1.5 | 1.5 | 1.5 | 1.5 | 1.5 | 1.5 | 1.5 |
| R1234yf | mass% | 65.1 | 60.7 | 56.8 | 56.8 | 53.8 | 50.7 | 50.7 | 35.6 | 24.5 |

(continued)

| x=R32 | x | x | x |
|---|---|---|---|
| HFO-1132E approximate expression | 0.0 | 0.0 | 0.0 |
| HFO-1132a approximate expression | 1.5 | 1.5 | 1.5 |
| R1234yf approximate expression | -x+98.5 | -x+98.5 | -x+98.5 |

Table 16

| Point C approximate expression | | | | | | | | | |
|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 68.6 | 59.1 | 50.2 | 50.2 | 41.5 | 29.9 | 29.9 | 20.4 | 16.1 |
| HFO-1132a | mass% | 0.0 | 0.0 | 0.0 | 0.0 | 0.0 | 0.0 | 0.0 | 0.0 | 0.0 |
| R1234yf | mass% | 31.4 | 35.9 | 39.8 | 39.8 | 43.2 | 47.1 | 47.1 | 49.6 | 50.5 |
| x=R32 | | x | | x | | | x | | |
| HFO-1132E approximate expression | | $0.012x^2-1.96x+68.6$ | | $0.0104x^2-1.9043x+68.204$ | | | $0.0089x^2-1.8282x+67.247$ | | |
| HFO-1132a approximate expression | | 0.0 | | 0.0 | | | 0.0 | | |
| R1234yf approximate expression | | $-0.012x^2+0.96x+31.4$ | | $-0.0104x^2+0.9043x+31.796$ | | | $-0.0089x^2+0.8282x+32.753$ | | |

| R32 | mass% | 33.4 | 37.8 | 41.7 | 41.7 | 44.7 | 47.8 |
|---|---|---|---|---|---|---|---|
| HFO-1132E | mass% | 16.1 | 10.8 | 6.4 | 6.4 | 3.2 | 0.0 |
| HFO-1132a | mass% | 0.0 | 0.0 | 0.0 | 0.0 | 0.0 | 0.0 |
| R1234yf | mass% | 50.5 | 51.4 | 51.9 | 51.9 | 52.1 | 52.2 |
| x=R32 | | | x | | x | |
| HFO-1132E approximate expression | | $0.0092x^2-1.8594x+67.944$ | | | $0.00562x^2-1.554x+61.394$ | |
| HFO-1132a approximate expression | | 0.0 | | | 0.0 | |
| R1234yf approximate expression | | $-0.0092x^2+0.8594x+32.056$ | | | $-0.00562x^2+0.554x+38.606$ | |

Table 17

| Point D approximate expression | | | | | | | | | |
|---|---|---|---|---|---|---|---|---|---|
| R32 | mass% | 0.0 | 5.0 | 10.0 | 62.9 | 74.0 | 30.0 | 33.4 | 37.8 |
| HFO-1132E | mass% | 63.2 | 54.1 | 45.6 | 14.8 | 5.0 | 16.7 | 12.5 | 7.4 |
| HFO-1132a | mass% | 1.5 | 1.5 | 1.5 | 22.3 | 21.0 | 1.5 | 1.5 | 1.5 |
| R1234yf | mass% | 35.3 | 39.4 | 42.9 | 0.0 | 0.0 | 51.8 | 52.6 | 53.3 |
| x=R32 | | x | | | x | | x | | |
| HFO-1132E approximate expression | | $0.012x^2-1.88x+63.2$ | | | $-1.6038x+61.638$ | | $0.0098x^2-1.8547x+63.548$ | | |

(continued)

| x=R32 | x | x | x |
|---|---|---|---|
| HFO-1132a approximate expression | 1.5 | 1.5 | 1.5 |
| R1234yf approximate expression | $-0.012x^2-0.88x+35.3$ | $0.6038x+36.862$ | $-0.0098x^2+0.8547x+34.952$ |

| | | | | |
|---|---|---|---|---|
| R32 | mass% | 37.8 | 41.7 | 44.7 |
| HFO-1132E | mass% | 7.4 | 3.1 | 0.0 |
| HFO-1132a | mass% | 1.5 | 1.5 | 1.5 |
| R1234yf | mass% | 53.3 | 53.7 | 53.8 |
| x=R32 | | x | | |
| HFO-1132E approximate expression | | $0.01005x^2-1.9002x+64.892$ | | |
| HFO-1132a approximate expression | | 1.5 | | |
| R1234yf approximate expression | | $-0.01005x^2+0.9002x+33.608$ | | |

Table 18

| Point E approximate expression | | 0.0 | 5.0 | 10.0 | 10.0 | 15.3 | 23.0 | 23.0 | 30.0 | 33.4 |
|---|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 58.6 | 51.5 | 44.3 | 44.3 | 37.1 | 26.4 | 26.4 | 16.7 | 11.8 |
| HFO-1132a | mass% | 2.9 | 2.3 | 1.9 | 1.9 | 1.5 | 1.3 | 1.3 | 1.5 | 1.8 |
| R1234yf | mass% | 38.5 | 41.2 | 43.8 | 43.8 | 46.1 | 49.3 | 49.3 | 51.8 | 53.0 |
| x=R32 | | | x | | x | | | x | | |
| HFO-1132E approximate expression | | | $-0.002x^2-1.41x+58.6$ | | $-0.0024x^2-1.2979x+57.519$ | | | $-0.0053x^2-1.1031x+54.592$ | | |
| HFO-1132a approximate expression | | | $0.004x^2-0.14x+2.9$ | | $0.0038x2-0.1718x+3.2373$ | | | $0.0057x2-0.2755x+4.6013$ | | |
| R1234yf approximate expression | | | $-0.002x^2+0.55x+38.5$ | | $-0.0014x^2+0.4697x+39.2437$ | | | $-0.0004x^2+0.3786x+40.8067$ | | |

| R32 | mass% | 33.4 | 37.8 | 41.7 | 41.7 | 44.7 | 47.8 |
|---|---|---|---|---|---|---|---|
| HFO-1132E | mass% | 11.8 | 5.7 | 0.0 | 0.0 | 0.0 | 0.0 |
| HFO-1132a | mass% | 1.8 | 2.3 | 3.0 | 3.0 | 1.5 | 0.0 |
| R1234yf | mass% | 53.0 | 54.2 | 55.3 | 55.3 | 53.8 | 52.2 |
| x=R32 | | x | | | x | | |
| HFO-1132E approximate expression | | $-0.00908x^2-0.7415x-+46.67$ | | | 0.0 | | |
| HFO-1132a approximate expression | | $0.00793x^2-0.4513x+8.0212$ | | | $0.00263x^2-0.7285x+28.779$ | | |
| R1234yf approximate expression | | $0.00115x^2+0.1928x+45.3088$ | | | $-0.00263x^2-0.2715x+71.221$ | | |

Table 19

| Point F approximate expression | | | | | | | | | |
|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 91.9 | 85.5 | 78.4 | 78.4 | 68.6 | 57.3 | 57.3 | 46.5 | 41.5 |
| HFO-1132a | mass% | 8.1 | 9.5 | 11.6 | 11.6 | 16.1 | 19.7 | 19.7 | 23.5 | 25.1 |
| R1234yf | mass% | 0.0 | 0.0 | 0.0 | 0.0 | 0.0 | 0.0 | 0.0 | 0.0 | 0.0 |
| x=R32 | | x | | | x | | | x | | |
| HFO-1132E approximate expression | | $-0.014x^2-1.21x+91.9$ | | | $0.0046x^2-1.2626x+76.983$ | | | $-0.0026x^2-0.5259x+58.197$ | | |
| HFO-1132a approximate expression | | $0.014x^2+0.21x+8.1$ | | | $-0.0046x^2+0.2626x+23.017$ | | | $0.0026x^2-0.4741x+41.803$ | | |
| R1234yf approximate expression | | 0.0 | | | 0.0 | | | 0.0 | | |

| | | | | | | | | | |
|---|---|---|---|---|---|---|---|---|---|
| R32 | mass% | 33.4 | 37.8 | 41.7 | 41.7 | 44.7 | 47.8 | 47.8 | 62.9 | 74.0 |
| HFO-1132E | mass% | 41.5 | 36.2 | 32.3 | 32.3 | 29.7 | 27.1 | 27.1 | 14.8 | 5.0 |
| HFO-1132a | mass% | 25.1 | 26.0 | 26.0 | 26.0 | 25.6 | 25.1 | 25.1 | 22.3 | 21.0 |
| R1234yf | mass% | 0.0 | 0.0 | 0.0 | 0.0 | 0.0 | 0.0 | 0.0 | 0.0 | 0.0 |
| x=R32 | | x | | | x | | | x | | |
| HFO-1132E approximate expression | | $0.02462x^2-2.9592x+112.85$ | | | $0.0193x^2-2.5362x+104.46$ | | | $0.0013x^2-0.9614x+70.124$ | | |
| HFO-1132a approximate expression | | $-0.02462x^2+1.9592x-12.85$ | | | $-0.0193x^2+1.5362x-4.46$ | | | $-0.0013x^2-0.0386x+29.876$ | | |
| R1234yf approximate expression | | 0.0 | | | 0.0 | | | 0.0 | | |

# EP 3 992 546 B1

Table 20

| Point H approximate expression | | | | | | | | | | |
|---|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 49.0 | 46.7 | 42.5 | 42.5 | 37.1 | 27.2 | 27.2 | 16.7 | 108 |
| HFO-1132a | mass% | 1.5 | 1.5 | 1.5 | 1.5 | 1.5 | 1.5 | 1.5 | 1.5 | 1.5 |
| R1234yf | mass% | 48.5 | 46.8 | 46.0 | 46.0 | 46.1 | 48.3 | 48.3 | 51.8 | 54.3 |
| x=R32 | | x | | | x | | | x | | |
| HFO-1132E approximate expression | | $-0.038x^2-0.27x+49.0$ | | | $-0.0205x^2-0.4995x+49.548$ | | | $-0.0226x^2-0.3009x+46.089$ | | |
| HFO-1132a approximate expression | | 1.5 | | | 1.5 | | | 1.5 | | |
| R1234yf approximate expression | | $0.038x^2-0.73x+49.5$ | | | $0.0205x^2-0.5005x+48.952$ | | | $0.0226x^2-0.6991x+52.411$ | | |

| R32 | mass% | 33.4 | 37.8 |
|---|---|---|---|
| HFO-1132E | mass% | 10.8 | 0.0 |
| HFO-1132a | mass% | 1.5 | 1.5 |
| R1234yf | mass% | 54.3 | 60.7 |
| x=R32 | | x | |
| HFO-1132E approximate expression | | $-2.4545x+92.782$ | |
| HFO-1132a approximate expression | | 1.5 | |
| R1234yf approximate expression | | $1.4545x+5.718$ | |

Table 21

| Point I approximate expression | | | | | | | | | | |
|---|---|---|---|---|---|---|---|---|---|---|
| R32 | mass% | 0.0 | 5.0 | 10.0 | 10.0 | 15.3 | 23.0 | 23.0 | 30.0 | 33.4 |
| HFO-1132E | mass% | 35.7 | 36.9 | 34.4 | 34.4 | 29.7 | 20.5 | 20.5 | 9.2 | 0.0 |
| HFO-1132a | mass% | 0.0 | 0.0 | 0.0 | 0.0 | 0.0 | 0.0 | 0.0 | 0.0 | 0.0 |
| R1234yf | mass% | 64.3 | 58.1 | 55.6 | 55.6 | 55.0 | 56.5 | 56.5 | 61.0 | 66.6 |
| x=R32 | | x | | | x | | | x | | |
| HFO-1132E approximate expression | | $-0.074x^2+0.61x+35.7$ | | | $-0.0237x^2-0.2874x+39.643$ | | | $-0.105x^2+3.9487x-14.79$ | | |
| HFO-1132a approximate expression | | 0.0 | | | 0.0 | | | 0.0 | | |
| R1234yf approximate expression | | $0.074x^2-1.61x+64.3$ | | | $0.0237x^2-0.7126x+60.357$ | | | $0.105x^2-4.9487x+114.79$ | | |

24

| | | | | | | | | | | |
|---|---|---|---|---|---|---|---|---|---|---|
| R32 | mass% | 33.4 | 37.8 | 41.7 | 41.7 | 44.7 | 47.8 | 47.8 | 62.9 | 74.0 |
| HFO-1132E | mass% | 0.0 | 0.0 | 0.0 | 0.0 | 0.0 | 0.0 | 0.0 | 0.0 | 0.0 |
| HFO-1132a | mass% | 0.0 | 1.5 | 3.0 | 3.0 | 4.4 | 5.8 | 5.8 | 15.5 | 19.4 |
| R1234yf | mass% | 66.6 | 60.7 | 55.3 | 55.3 | 50.9 | 46.4 | 46.4 | 21.6 | 6.6 |
| x=R32 | | $x$ | | | $x$ | | | $x$ | | |
| HFO-1132E approximate expression | | $0.0053x^2-0.034x-4.74$ | | | $-0.0025x^2+0.6799x-20.96$ | | | $-0.01111x^2+1.8721x-58.3$ | | |
| HFO-1132a approximate expression | | 0.0 | | | 0.0 | | | 0.0 | | |
| R1234yf approximate expression | | $-0.0053x^2-0.966x+104.74$ | | | $0.0025x^2-1.6799x+120.96$ | | | $0.01111x^2-2.8721x+158.3$ | | |

Table 22

| Point J approximate expression | | | | | | | | | |
|---|---|---|---|---|---|---|---|---|---|
| R32 | mass% | 15.3 | 23.0 | 23.0 | 30.0 | 33.4 | 33.4 | 37.8 | 41.7 |
| HFO-1132E | mass% | 68.6 | 53.0 | 53.0 | 41.2 | 35.6 | 35.6 | 29.6 | 24.5 |
| HFO-1132a | mass% | 16.1 | 14.3 | 14.3 | 13.3 | 12.4 | 12.4 | 12.5 | 12.7 |
| R1234yf | mass% | 0.0 | 9.7 | 9.7 | 15.5 | 18.6 | 18.6 | 20.1 | 21.1 |
| x=R32 | | x | | x | | | x | | |
| HFO-1132E approximate expression | | $-2.026x+99.597$ | | $0.0037x^2-1.8827x+94.336$ | | | $0.00673x^2-1.8435x+89.655$ | | |
| HFO-1132a approximate expression | | $-0.2338x+19.677$ | | $-0.0117x^2+0.4781x+9.5015$ | | | $0.00347x^2-0.2223x+15.9846$ | | |
| R1234yf approximate expression | | $1.2598x-19.274$ | | $0.008x^2+0.4046x-3.8375$ | | | $-0.0102x^2+1.0658x-5.6396$ | | |

| R32 | mass% | 41.7 | 44.7 | 47.8 | 47.8 | 62.9 |
|---|---|---|---|---|---|---|
| HFO-1132E | mass% | 24.5 | 20.8 | 17.4 | 17.4 | 0.0 |
| HFO-1132a | mass% | 12.7 | 12.9 | 13.4 | 13.4 | 15.5 |
| R1234yf | mass% | 21.1 | 21.6 | 21.4 | 21.4 | 21.6 |
| x=R32 | | | | x | | x |
| HFO-1132E approximate expression | | $0.0224x^2-3.1675x+117.66$ | | | $-1.1523x+72.481$ | |
| HFO-1132a approximate expression | | $0.0155x^2-1.2736x+38.833$ | | | $0.1391x+6.7523$ | |
| R1234yf approximate expression | | $-0.0379x^2+3.4411x-56.493$ | | | $0.0132x+20.7667$ | |

**Claims**

1. A composition comprising a refrigerant comprising trans-1,2-difluoroethylene (HFO-1132(E)), 1,1-difluoroethylene (HFO-1132a), 2,3,3,3-tetrafluoro-1-propene (R1234yf), and difluoromethane (R32),

wherein in the refrigerant, when the mass% of HFO-1132(E), HFO-1132a, R1234yf, and R32 based on their sum is respectively represented by x, y, z, and a, coordinates (x,y,z) in a ternary composition diagram in which the sum of HFO-1132(E), HFO-1132a, and R1234yf is (100-a) mass% are within the range of
if $0<a\leq10.0$:
a figure surrounded by straight lines OC, CD, DE, EF, and FO that connect the following 5 points, or on the straight lines CD, DE, and EF (excluding the points O, C, and F):

O    (100-a, 0.0, 0.0),
C    ($0.012a^2-1.96a+68.6$, 0.0, $-0.012a^2+0.96a+31.4$),
D    ($0.012a^2-1.88a+63.2$, 1.5, $-0.012a^2+0.88a+35.3$),
E    ($-0.002a^2-1.41a+58.6$, $0.004a^2-0.14a+2.9$, $-0.002a^2+0.55a+38.5$), and
F    ($-0.014a^2-1.21a+91.9$, $0.014a^2+0.21a+8.1$, 0.0);

if $10.0<a\leq15.3$:
a figure surrounded by straight lines OC, CD, DE, EF, and FO that connect the following 5 points, or on the straight lines CD, DE, and EF (excluding the points O, C, and F):

| | |
|---|---|
| O | (100-a, 0.0, 0.0), |
| C | $(0.0104a^2-1.9043a+68.204, 0.0, -0.0104a^2+0.9043a+31.796)$, |
| D | (-1.6038a+61.638, 1.5, 0.6038a+36.862), |
| E | $(-0.0024a^2-1.2979a+57.519, 0.0038a^2-0.1718a+3.2373, -0.0014a^2+0.4697a+39.2437)$, and |
| F | $(0.0046a^2-1.2626a+76.983, -0.0046a^2+0.2626a+23.017, 0.0)$; |

if $15.3<a\leq23.0$:
a figure surrounded by straight lines OC, CE, EH, HJ, JF, and FO that connect the following 6 points, or on the straight lines CE, EH, HJ, and JF (excluding the points O, C, and F):

| | |
|---|---|
| O | (100-a, 0.0, 0.0), |
| C | $(0.0104a^2-1.9043a+68.204, 0.0, -0.0104a^2+0.9043a+31.796)$, |
| E | $(-0.0024a^2-1.2979a+57.519, 0.0038a^2-0.1718a+3.2373, -0.0014a^2+0.4697a+39.2437)$, |
| H | $(-0.0205a^2-0.4995a+49.548, 1.5, 0.0205a^2-0.5005a+48.952)$, |
| J | (-2.026a+99.597, -0.2338a+19.677, 1.2598a-19.274), and |
| F | $(0.0046a^2-1.2626a+76.983, -0.0046a^2+0.2626a+23.017, 0.0)$; |

if $23.0<a\leq30.0$:
a figure surrounded by straight lines OC, CE, EH, HJ, JF, and FO that connect the following 6 points, or on the straight lines CE, EH, HJ, and JF (excluding the points O, C, and F):

| | |
|---|---|
| O | (100-a, 0.0, 0.0), |
| C | $(0.0089a^2-1.8282a+67.247, 0.0, -0.0089a^2+0.8282a+32.753)$, |
| E | $(-0.0053a^2-1.1031a+54.592, 0.0057a^2-0.2755a+4.6013, -0.0004a^2+0.3786a+40.8067)$, |
| H | $(-0.0226a^2-0.3009a+46.089, 1.5, 0.0226a^2-0.6991a+52.411)$, |
| J | $(0.0037a^2-1.8827a+94.336, -0.0117a^2+0.4781a+9.5015, 0.008a^2+0.4046a-3.8375)$, and |
| F | $(-0.0026a^2-0.5259a+58.197, 0.0026a^2-0.4741a+41.803, 0.0)$; |

if $30.0<a\leq33.4$:
a figure surrounded by straight lines OC, CD, DE, EJ, JF, and FO that connect the following 6 points, or on the straight lines CD, DE, EJ, and JF (excluding the points O, C, and F):

| | |
|---|---|
| O | (100-a, 0.0, 0.0), |
| C | $(0.0089a^2-1.8282a+67.247, 0.0, -0.0089a^2+0.8282a+32.753)$, |
| D | $(0.0098a^2-1.8547a+63.548, 1.5, -0.0098a^2+0.8547a+34.952)$, |
| E | $(-0.0053a^2-1.1031a+54.592, 0.0057a^2-0.2755a+4.6013, -0.0004a^2+0.3786a+40.8067)$, |
| J | $(0.0037a^2-1.8827a+94.336, -0.0117a^2+0.4781a+9.5015, 0.008a^2+0.4046a-3.8375)$, and |
| F | $(-0.0026a^2-0.5259a+58.197, 0.0026a^2-0.4741a+41.803, 0.0)$; |

if $33.4<a\leq41.7$:
a figure surrounded by straight lines OC, CD, DE, EJ, JF, and FO that connect the following 6 points, or on the straight lines CD, DE, EJ, and JF (excluding the points O, C, and F):

| | |
|---|---|
| O | (100-a, 0.0, 0.0), |
| C | $(0.0092a^2-1.8594a+67.944, 0.0, -0.0092a^2+0.8594a+32.056)$, |
| D | $(0.0098a^2-1.8547a+63.548, 1.5, -0.0098a^2+0.8547a+34.952)$, |
| E | $(-0.00908a^2-0.7415a+46.67, 0.00793a^2-0.4513a+8.0212, 0.00115a^2+0.1928a+45.3088)$, |
| J | $(0.00673a^2-1.8435a+89.655, 0.00347a^2-0.2223a+15.9846, -0.0102a^2+1.0658a-5.6396)$, and |
| F | $(0.02462a^2-2.9592a+112.85, -0.02462a^2+1.9592a-12.85, 0.0)$; |

if 41.7<a≤44.7:
a figure surrounded by straight lines OC, CD, DI, IJ, JF, and FO that connect the following 6 points, or on the straight lines CD, DI, IJ, and JF (excluding the points O, I, C, and F) :

O    (100-a, 0.0, 0.0),
C    ($0.00562a^2$-1.554a+61.394, 0.0, $-0.00562a^2$+0.554a+38.606),
D    ($0.0098a^2$-1.8547a+63.548, 1.5, $-0.0098a^2$+0.8547a+34.952),
I    ($-0.0025a^2$+0.6799a-20.96, 0.0, $0.0025a^2$-1.6799a+120.96),
J    ($0.0224a^2$-3.1675a+117.66, $0.0155a^2$-1.2736a+38.833, $-0.0379a^2$+3.4411a-56.493), and
F    ($0.0193a^2$-2.5362a+104.46, $-0.0193a^2$+1.5362a-4.46, 0.0);

if 44.7<a≤47.8:
a figure surrounded by straight lines OC, CE, EI, IJ, JF, and FO that connect the following 6 points, or on the straight lines CE, IJ, and JF (excluding the points O, E, C, and F):

O    (100-a, 0.0, 0.0),
C    ($0.00562a^2$-1.554a+61.394, 0.0, $-0.00562a^2$+0.554a+38.606),
E    (0.0, $0.00263a^2$-0.7285a+28.779, $-0.00263a^2$-0.2715a+71.221),
I    ($-0.0025a^2$+0.6799a-20.96, 0.0, $0.0025a^2$-1.6799a+120.96),
J    ($0.0224a^2$-3.1675a+117.66, $0.0155a^2$-1.2736a+38.833, $-0.0379a^2$+3.4411a-56.493), and
F    ($0.0193a^2$-2.5362a+104.46, $-0.0193a^2$+1.5362a-4.46, 0.0);

if 47.8<a≤62.9:
a figure surrounded by straight lines OP, PI, IJ, JF, and FO that connect the following 5 points, or on the straight lines IJ and JF (excluding the points O, P, I, and F):

O    (100-a, 0.0, 0.0),
P    (0, 0, 100-a),
I    ($-0.01111a^2$+1.8721a-58.3, 0.0, $0.01111a^2$-2.8721a+158.3),
J    (-1.1523a+72.481, 0.1391a+6.7523, 0.0132a+20.7667), and
F    ($0.0013a^2$-0.9614a+70.124, $-0.0013a^2$-0.0386a+29.876, 0.0);

or
if 62.9<a≤74.0:
a figure surrounded by straight lines OP, PI, IF, and FO that connect the following 4 points, or on the straight line IF (excluding the points O, P, I, and F):

O    (100-a, 0.0, 0.0),
P    (0, 0, 100-a),
I    ($-0.01111a^2$+1.8721a-58.3, 0.0, $0.01111a^2$-2.8721a+158.3), and
F    ($0.0013a^2$-0.9614a+70.124, $-0.0013a^2$-0.0386a+29.876, 0.0).

2. The composition of claim 1, for use as a working fluid for a refrigerating machine, wherein the composition further comprises a refrigeration oil.

3. Use of the composition of claim 1 or 2 as an alternative refrigerant for R410A.

4. A refrigerating machine comprising the composition of claim 1 or 2 as a working fluid.

5. A method for operating a refrigerating machine, comprising circulating the composition of claim 1 or 2 as a working fluid in a refrigerating machine.

**Patentansprüche**

1. Zusammensetzung, umfassend ein Kühlmittel, umfassend trans-1,2-Difluorethylen (HFO-1132(E)), 1,1-Difluorethylen (HFO-1132a), 2,3,3,3-Tetrafluor-1-propen (R1234yf) und Difluormethan (R32),

   worin in dem Kühlmittel, wenn die Massen-% von HFO-1132(E), HFO-1132a, R1234yf und R32 bezogen auf ihre Summe jeweils durch x, y, z und a dargestellt werden, die Koordinaten (x, y, z) in einem ternären Zusammensetzungsdiagramm, in welchem die Summe von HFO-1132(E), HFO-1132a und R1234yf (100-a) Massen-% beträgt, innerhalb des Bereichs liegen von

   wenn $0 < a \leq 10{,}0$:
   einer Figur, die von den geraden Linien OC, CD, DE, EF und FO umgeben ist, die die folgenden 5 Punkte verbinden, oder auf den geraden Linien CD, DE und EF (ausgenommen die Punkte O, C und F):

   |   |   |
   |---|---|
   | O | $(100-a;\ 0{,}0;\ 0{,}0)$, |
   | C | $(0{,}012a^2-1{,}96a+68{,}6;\ 0{,}0;\ -0{,}012a^2+0{,}96a+31{,}4)$, |
   | D | $(0{,}012a^2-1{,}88a+63{,}2;\ 1{,}5;\ -0{,}012a^2+0{,}88a+35{,}3)$, |
   | E | $(-0{,}002a^2-1{,}41a+58{,}6;\ 0{,}004a^2-0{,}14a+2{,}9;\ -0{,}002a^2+0{,}55a+38{,}5)$, und |
   | F | $(-0{,}014a^2-1{,}21a+91{,}9;\ 0{,}014a^2+0{,}21a+8{,}1;\ 0{,}0)$; |

   wenn $10{,}0 < a \leq 15{,}3$:
   einer Figur, die von den geraden Linien OC, CD, DE, EF und FO umgeben ist, die die folgenden 5 Punkte verbinden, oder auf den geraden Linien CD, DE und EF (ausgenommen die Punkte O, C und F):

   |   |   |
   |---|---|
   | O | $(100-a;\ 0{,}0;\ 0{,}0)$, |
   | C | $(0{,}0104a^2-1{,}9043a+68{,}204;\ 0{,}0;\ -0{,}0104a^2+0{,}9043a+31{,}796)$, |
   | D | $(-1{,}6038a+61{,}638;\ 1{,}5;\ 0{,}6038a+36{,}862)$, |
   | E | $(-0{,}0024a^2-1{,}2979a+57{,}519;\ 0{,}0038a^2-0{,}1718a+3{,}2373;\ -0{,}0014a^2+0{,}4697a+39{,}2437)$, und |
   | F | $(0{,}0046a^2-1{,}2626a+76{,}983;\ -0{,}0046a^2+0{,}2626a+23{,}017;\ 0{,}0)$; |

   wenn $15{,}3 < a \leq 23{,}0$:
   einer Figur, die von den geraden Linien OC, CE, EH, HJ, JF und FO umgeben ist, die die folgenden 6 Punkte verbinden, oder auf den geraden Linien CE, EH, HJ und JF (ausgenommen die Punkte O, C und F):

   |   |   |
   |---|---|
   | O | $(100-a;\ 0{,}0;\ 0{,}0)$, |
   | C | $(0{,}0104a^2-1{,}9043a+68{,}204;\ 0{,}0;\ -0{,}0104a^2+0{,}9043a+31{,}796)$, |
   | E | $(-0{,}0024a^2-1{,}2979a+57{,}519;\ 0{,}0038a^2-0{,}1718a+3{,}2373;\ -0{,}0014a^2+0{,}4697a+39{,}2437)$, |
   | H | $(-0{,}0205a^2-0{,}4995a+49{,}548;\ 1{,}5;\ 0{,}0205a^2-0{,}5005a+48{,}952)$, |
   | J | $(-2{,}026a+99{,}597;\ -0{,}2338a+19{,}677;\ 1{,}2598a-19{,}274)$, und |
   | F | $(0{,}0046a^2-1{,}2626a+76{,}983;\ -0{,}0046a^2+0{,}2626a+23{,}017;\ 0{,}0)$; |

   wenn $23{,}0 < a \leq 30{,}0$:
   einer Figur, die von den geraden Linien OC, CE, EH, HJ, JF und FO umgeben ist, die die folgenden 6 Punkte verbinden, oder auf den geraden Linien CE, EH, HJ und JF (ausgenommen die Punkte O, C und F):

   |   |   |
   |---|---|
   | O | $(100-a;\ 0{,}0;\ 0{,}0)$, |
   | C | $(0{,}0089a^2-1{,}8282a+67{,}247;\ 0{,}0;\ -0{,}0089a^2+0{,}8282a+32{,}753)$, |
   | E | $(-0{,}0053a^2-1{,}1031a+54{,}592;\ 0{,}0057a^2-0{,}2755a+4{,}6013;\ -0{,}0004a^2+0{,}3786a+40{,}8067)$, |
   | H | $(-0{,}0226a^2-0{,}300\%9a+46{,}089;\ 1{,}5;\ 0{,}0226a^2-0{,}6991a+52{,}411)$, |
   | J | $(0{,}0037a^2-1{,}8827a+94{,}336;\ -0{,}0117a^2+0{,}4781a+9{,}5015;\ 0{,}008a^2+0{,}4046a-3{,}8375)$, und |
   | F | $(-0{,}0026a^2-0{,}5259a+58{,}197;\ 0{,}0026a^2-0{,}4741a+41{,}803;\ 0{,}0)$; |

   wenn $30{,}0 < a \leq 33{,}4$:

einer Figur, die von den geraden Linien OC, CD, DE, EJ, JF und FO umgeben ist, die die folgenden 6 Punkte verbinden, oder auf den geraden Linien CD, DE, EJ und JF (ausgenommen die Punkte O, C und F):

| | |
|---|---|
| O | (100-a, 0,0, 0,0), |
| C | ($0,0089a^2$-1,8282a+67,247, 0,0, $-0,0089a^2$+0,8282a+32,753), |
| D | ($0,0098a^2$-1,8547a+63,548, 1,5, $-0,0098a^2$+0,8547a+34,952), |
| E | ($-0,0053a^2$-1,1031a+54,592, $0,0057a^2$-0,2755a+4,6013, $-0,0004a^2$+0,3786a+40,8067), |
| J | ($0,0037a^2$-1,8827a+94,336, $-0,0117a^2$+0,4781a+9,5015, $0,008a^2$+0,4046a-3,8375), und |
| F | ($-0,0026a^2$-0,5259a+58,197, $0,0026a^2$-0,4741a+41,803, 0,0); |

wenn 33,4<a≤41,7:
einer Figur, die von den geraden Linien OC, CD, DE, EJ, JF und FO umgeben ist, die die folgenden 6 Punkte verbinden, oder auf den geraden Linien CD, DE, EJ und JF (ausgenommen die Punkte O, C und F):

| | |
|---|---|
| O | (100-a, 0,0, 0,0), |
| C | ($0,0092a^2$-1,8594a+67,944; 0,0; $-0,0092a^2$+0,8594a+32,056), |
| D | ($0,0098a^2$-1,8547a+63,548; 1,5; $-0,0098a^2$+0,8547a+34,952), |
| E | ($-0,00908a^2$-0,7415a+46,67; $0,00793a^2$-0,4513a+8,0212; $0,00115a^2$+0,1928a+45,3088), |
| J | ($0,00673a^2$-1,8435a+89,655; $0,00347a^2$-0,2223a+15,9846; $-0,0102a^2$+1,0658a-5,6396), und |
| F | ($0,02462a^2$-2,9592a+112,85; $-0,02462a^2$+1,9592a-12,85; 0,0); |

wenn 41,7<a≤44,7:
einer Figur, die von den geraden Linien OC, CD, DI, IJ, JF und FO umgeben ist, die die folgenden 6 Punkte verbinden, oder auf den geraden Linien CD, DI, IJ und JF (ausgenommen die Punkte O, I, C und F):

| | |
|---|---|
| O | (100-a; 0,0; 0,0), |
| C | ($0,00562a^2$-1,554a+61,394; 0,0; $-0,00562a^2$+0,554a+38,606), |
| D | ($0,0098a^2$-1,8547a+63,548; 1,5; $-0,0098a^2$+0,8547a+34,952), |
| I | ($-0,0025a^2$+0,6799a-20,96; 0,0; $0,0025a^2$-1,6799a+120,96), |
| J | ($0,0224a^2$-3,1675a+117,66; $0,0155a^2$-1,2736a+38,833; $-0,0379a^2$+3,4411a-56,493), und |
| F | ($0,0193a^2$-2,5362a+104,46; $-0,0193a^2$+1,5362a-4,46; 0,0); |

wenn 44,7<a≤47,8:
einer Figur, die von den geraden Linien OC, CE, EI, IJ, JF und FO umgeben ist, die die folgenden 6 Punkte verbinden, oder auf den geraden Linien CE, IJ und JF (ausgenommen die Punkte O, E, C und F):

| | |
|---|---|
| O | (100-a; 0,0; 0,0), |
| C | ($0,00562a^2$-1,554a+61,394; 0,0; $-0,00562a^2$+0,554a+38,606), |
| E | (0,0; $0,00263a^2$-0,7285a+28,779; $-0,00263a^2$-0,2715a+71,221), |
| I | ($-0,0025a^2$+0,6799a-20,96; 0,0; $0,0025a^2$-1,6799a+120,96), |
| J | ($0,0224a^2$-3,1675a+117,66; $0,0155a^2$-1,2736a+38,833; $-0,0379a^2$+3,4411a-56,493), und |
| F | ($0,0193a^2$-2,5362a+104,46; $-0,0193a^2$+1,5362a-4,46; 0,0); |

wenn 47,8<a≤62,9:
einer Figur, die von den geraden Linien OP, PI, IJ, JF und FO umgeben ist, die die folgenden 5 Punkte verbinden, oder auf den geraden Linien IJ und JF (ausgenommen die Punkte O, P, I und F):

| | |
|---|---|
| O | (100-a; 0,0; 0,0), |
| P | (0; 0; 100-a), |
| I | ($-0,01111a^2$+1,8721a-58,3; 0,0; $0,01111a^2$-2,8721a+158,3), |
| J | (-1,1523a+72,481; 0,1391a+6,7523; 0,0132a+20,7667), und |

(continued)

F    (0,0013a$^2$-0,9614a+70,124; -0,0013a$^2$-0,0386a+29,876; 0,0); oder

wenn 62,9<a≤74,0:
einer Figur, die von den geraden Linien OP, PI, IF und FO umgeben ist, die die folgenden 4 Punkte verbinden, oder auf der geraden Linie IF (ausgenommen die Punkte O, P, I und F):

O    (100-a; 0,0; 0,0),
P    (0; 0; 100-a),
I    (-0,01111a$^2$+1,8721a-58,3; 0,0; 0,01111a$^2$-2,8721a+158,3) und
F    (0,0013a$^2$-0,9614a+70,124; -0,0013a$^2$-0,0386a+29,876; 0,0).

2.  Zusammensetzung gemäß Anspruch 1 zur Verwendung als Arbeitsfluid für eine Kältemaschine, worin die Zusammensetzung ferner ein Kühlmittelöl umfasst.

3.  Verwendung der Zusammensetzung gemäß Anspruch 1 oder 2 als alternatives Kühlmittel für R410A.

4.  Kühlmaschine, umfassend die Zusammensetzung gemäß Anspruch 1 oder 2 als Arbeitsfluid.

5.  Verfahren zum Betreiben einer Kühlmaschine, umfassend das Zirkulieren der Zusammensetzung gemäß Anspruch 1 oder 2 als Arbeitsfluid in einer Kühlmaschine.

**Revendications**

1.  Composition comprenant un réfrigérant comprenant du trans-1,2-difluoroéthylène (HFO-1132(E)), du 1,1-difluoroéthylène (HFO-1132a), du 2,3,3,3-tétrafluoro-1-propène (R1234yf) et du difluorométhane (R32),

    dans laquelle, dans le réfrigérant, lorsque le pourcentage massique de HFO-1132(E), HFO-1132a, R1234yf et R32, basé sur leur somme, est respectivement représenté par x, y, z et a, les coordonnées (x, y, z) dans un diagramme de composition ternaire dans lequel la somme de HFO-1132(E), HFO-1132a et R1234yf est de (100-a) % en masse sont dans un domaine de
    si 0<a≤10,0 :
    une figure entourée par les lignes droites OC, CD, DE, EF et FO qui relient les 5 points suivants, ou sur les lignes droites CD, DE et EF (à l'exclusion des points O, C et F) :

    O    (100-a, 0.0, 0.0),
    C    (0.012a$^2$-1.96a+68.6, 0.0, -0.012a$^2$+0.96a+31.4),
    D    (0.012a$^2$-1.88a+63.2, 1.5, -0.012a$^2$+0.88a+35.3),
    E    (-0.002a$^2$-1.41a+58.6, 0.004a$^2$-0.14a+2.9, -0.002a$^2$+0.55a+38.5), et
    F    (-0.014a$^2$-1.21a+91.9, 0.014a$^2$+0.21a+8.1, 0.0) ;

    si 10,0<a≤15,3 :
    une figure entourée par les lignes droites OC, CD, DE, EF et FO qui relient les 5 points suivants, ou sur les lignes droites CD, DE et EF (à l'exclusion des points O, C et F) :

    O    (100-a, 0.0, 0.0),
    C    (0.0104a$^2$-1.9043a+68.204, 0.0, - 0.0104a$^2$+0.9043a+31.796),
    D    (-1.6038a+61.638, 1.5, 0.6038a+36.862),
    E    (-0.0024a$^2$-1.2979a+57.519, 0.0038a$^2$-0.1718a+3.2373, -0.0014a$^2$+0.4697a+39.2437), et
    F    (0.0046a$^2$-1.2626a+76.983, -0.0046a$^2$+0.2626a+23.017, 0.0) ;

    si 15,3<a≤23,0 :

une figure entourée par les lignes droites OC, CE, EH, HJ, JF et FO qui relient les 6 points suivants, ou sur les lignes droites CE, EH, HJ et JF (à l'exclusion des points O, C et F) :

| | |
|---|---|
| O | $(100-a, 0.0, 0.0)$, |
| C | $(0.0104a^2-1.9043a+68.204, 0.0, -0.0104a^2+0.9043a+31.796)$, |
| E | $(-0.0024a^2-1.2979a+57.519, 0.0038a^2-0.1718a+3.2373, -0.0014a^2+0.4697a+39.2437)$, |
| H | $(-0.0205a^2-0.4995a+49.548, 1.5, 0.0205a^2-0.5005a+48.952)$, |
| J | $(-2.026a+99.597, -0.2338a+19.677, 1.2598a-19.274)$, et |
| F | $(0.0046a^2-1.2626a+76.983, -0.0046a^2+0.2626a+23.017, 0.0)$ ; |

si $23,0 < a \leq 30,0$ :
une figure entourée par les lignes droites OC, CE, EH, HJ, JF et FO qui relient les 6 points suivants, ou sur les lignes droites CE, EH, HJ et JF (à l'exclusion des points O, C et F) :

| | |
|---|---|
| O | $(100-a, 0.0, 0.0)$, |
| C | $(0.0089a^2-1.8282a+67.247, 0.0, -0.0089a^2+0.8282a+32.753)$, |
| E | $(-0.0053a^2-1.1031a+54.592, 0.0057a^2-0.2755a+4.6013, -0.0004a^2+0.3786a+40.8067)$, |
| H | $(-0.0226a^2-0.3009a+46.089, 1.5, 0.0226a^2-0.6991a+52.411)$, |
| J | $(0.0037a^2-1.8827a+94.336, -0.0117a^2+0.4781a+9.5015, 0.008a^2+0.4046a-3.8375)$, et |
| F | $(-0.0026a^2-0.5259a+58.197, 0.0026a^2-0.4741a+41.803, 0.0)$ ; |

si $30,0 < a \leq 33,4$ :
une figure entourée par les lignes droites OC, CD, DE, EJ, JF et FO qui relient les 6 points suivants, ou sur les lignes droites CD, DE, EJ et JF (à l'exclusion des points O, C et F) :

| | |
|---|---|
| O | $(100-a, 0.0, 0.0)$, |
| C | $(0.0089a^2-1.8282a+67.247, 0.0, -0.0089a^2+0.8282a+32.753)$, |
| D | $(0.0098a^2-1.8547a+63.548, 1.5, -0.0098a^2+0.8547a+34.952)$, |
| E | $(-0.0053a^2-1.1031a+54.592, 0.0057a^2-0.2755a+4.6013, -0.0004a^2+0.3786a+40.8067)$, |
| J | $(0.0037a^2-1.8827a+94.336, -0.0117a^2+0.4781a+9.5015, 0.008a^2+0.4046a-3.8375)$, et |
| F | $(-0.0026a^2-0.5259a+58.197, 0.0026a^2-0.4741a+41.803, 0.0)$ ; |

si $33,4 < a \leq 41,7$ :
une figure entourée par les lignes droites OC, CD, DE, EJ, JF et FO qui relient les 6 points suivants, ou sur les lignes droites CD, DE, EJ et JF (à l'exclusion des points O, C et F) :

| | |
|---|---|
| O | $(100-a, 0.0, 0.0)$, |
| C | $(0.0092a^2-1.8594a+67.944, 0.0, -0.0092a^2+0.8594a+32.056)$, |
| D | $(0.0098a^2-1.8547a+63.548, 1.5, -0.0098a^2+0.8547a+34.952)$, |
| E | $(-0.00908a^2-0.7415a+46.67, 0.00793a^2-0.4513a+8.0212, 0.00115a^2+0.1928a+45.3088)$, |
| J | $(0.00673a^2-1.8435a+89.655, 0.00347a^2-0.2223a+15.9846, -0.0102a^2+1.0658a-5.6396)$, et |
| F | $(0.02462a^2-2.9592a+112.85, -0.02462a^2+1.9592a-12.85, 0.0)$ ; |

si $41,7 < a \leq 44,7$ :
une figure entourée par les lignes droites OC, CD, DE, EI, IJ, JF et FO qui relient les 6 points suivants, ou sur les lignes droites CD, DI, IJ et JF (à l'exclusion des points O, I, C et F) :

| | |
|---|---|
| O | $(100-a, 0.0, 0.0)$, |
| C | $(0.00562a^2-1.554a+61.394, 0.0, -0.00562a^2+0.554a+38.606)$, |
| D | $(0.0098a^2-1.8547a+63.548, 1.5, -0.0098a^2+0.8547a+34.952)$, |
| I | $(-0.0025a^2+0.6799a-20.96, 0.0, 0.0025a^2-1.6799a+120.96)$, |

(continued)

J　　(0.0224a$^2$-3.1675a+117.66, 0.0155a$^2$-1.2736a+38.833, -0.0379a$^2$+3.4411a-56.493), et

F　　(0.0193a$^2$-2.5362a+104.46, -0.0193a$^2$+1.5362a-4.46, 0.0) ;

si 44,7<a≤47,8 :
une figure entourée par les lignes droites OC, CE, EI, IJ, JF et FO qui relient les 6 points suivants, ou sur les lignes droites CE, IJ et JF (à l'exclusion des points O, E, C et F) :

O　　(100-a, 0.0, 0.0),

C　　(0.00562a$^2$-1.554a+61.394, 0.0, - 0.00562a$^2$+0.554a+38.606),

E　　(0.0, 0.00263a$^2$-0.7285a+28.779, -0.00263a$^2$-0.2715a+71.221),

I　　(-0.0025a$^2$+0.6799a-20.96, 0.0, 0.0025a$^2$-1.6799a+120.96),

J　　(0.0224a$^2$-3.1675a+117.66, 0.0155a$^2$-1.2736a+38.833, -0.0379a$^2$+3.4411a-56.493), et

F　　(0.0193a$^2$-2.5362a+104.46, -0.0193a$^2$+1.5362a-4.46, 0.0) ;

si 47,8<a≤62,9 :
une figure entourée par les lignes droites OP, PI, IJ, JF et FO qui relient les 5 points suivants, ou sur les lignes droites IJ et JF (à l'exclusion des points O, P, I et F) :

O　　(100-a, 0.0, 0.0),

P　　(0, 0, 100-a),

I　　(-0.01111a$^2$+1.8721a-58.3, 0.0, 0.01111a$^2$-2.8721a+158.3),

J　　(-1.1523a+72.481, 0.1391a+6.7523, 0.0132a+20.7667), et

F　　(0.0013a$^2$-0.9614a+70.124, -0.0013a$^2$-0.0386a+29.876, 0.0) ; ou

si 62,9<a≤74,0 :
une figure entourée par les lignes droites OP, PI, IF et FO qui relient les 4 points suivants, ou sur la ligne droite IF (à l'exclusion des points O, P, I et F) :

O　　(100-a, 0.0, 0.0),

P　　(0, 0, 100-a),

I　　(-0.01111a$^2$+1.8721a-58.3, 0.0, 0.01111a$^2$-2.8721a+158.3), et

F　　(0.0013a$^2$-0.9614a+70.124, -0.0013a$^2$-0.0386a+29.876, 0.0).

**2.** La composition selon la revendication 1, destinée à être utilisée comme fluide de travail pour une machine frigorifique, dans laquelle la composition comprend en outre une huile frigorifique.

**3.** Utilisation de la composition selon la revendication 1 ou 2 comme réfrigérant alternatif au R410A.

**4.** Machine frigorifique comprenant la composition selon la revendication 1 ou 2 comme fluide de travail.

**5.** Procédé pour faire fonctionner une machine frigorifique, comprenant la mise en circulation de la composition selon la revendication 1 ou 2 comme fluide de travail dans une machine frigorifique.

Fig. 1

Fig. 2

HFO-1132(E)

—Ternary diagram (R32=5%)

⋯⋯HFO-1132a=1.5%

Temperature glide 5°C

—85% Cap. (relative to R410A)

O
A
F
C
D
E
H
I

HFO-1132a

R1234yf

0    10    20    30    40    50    60    70    80    90    100

Fig. 3

Fig. 4

Fig. 5

Fig. 6

Fig. 7

HFO-1132(E)

—— Ternary diagram (R32=33.4%)

······ HFO-1132a=1.5%

~~~~~Temperature glide 5°C

—— 85% Cap. (relative to R410A)

O

A

F

J

C

D

E

H

I = P

HFO-1132a

B

R1234yf

Fig. 8

Fig. 9

Fig. 10

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A

- JP 2015229767 A